(19) **Europäisches Patentamt / European Patent Office / Office européen des brevets**

(11) **EP 4 682 858 A1**

(12) **EUROPEAN PATENT APPLICATION**
published in accordance with Art. 153(4) EPC

(43) Date of publication:
**21.01.2026 Bulletin 2026/04**

(21) Application number: **24797299.5**

(22) Date of filing: **03.04.2024**

(51) International Patent Classification (IPC):
**G09G 3/00** (2006.01)    **G09G 3/3208** (2016.01)

(52) Cooperative Patent Classification (CPC):
**G09G 3/00; G09G 3/3208**

(86) International application number:
**PCT/KR2024/004282**

(87) International publication number:
**WO 2024/225641 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 KR 20230054212**
            **22.05.2023 KR 20230065852**

(71) Applicant: **SAMSUNG ELECTRONICS CO., LTD.**
**Yeongtong-gu**
**Suwon-si, 16677 (KR)**

(72) Inventors:
• **YOON, Heewoong**
**Suwon-si Gyeonggi-do 16677 (KR)**

• **KIM, Jongah**
**Suwon-si Gyeonggi-do 16677 (KR)**
• **PARK, Jeongmin**
**Suwon-si Gyeonggi-do 16677 (KR)**
• **LEE, Kihyuk**
**Suwon-si Gyeonggi-do 16677 (KR)**
• **LEE, Donghan**
**Suwon-si Gyeonggi-do 16677 (KR)**
• **CHOI, Gwangho**
**Suwon-si Gyeonggi-do 16677 (KR)**
• **JEONG, Hoyoung**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE COMPRISING OPTICAL SENSOR ARRANGED IN DISPLAY AREA AND CONTROL METHOD THEREFOR**

(57)  An electronic device is disclosed. The electronic device may comprise: a housing; a flexible display of which at least a part is exposed to the outside through the housing; at least one optical sensor; and at least one processor operatively connected to the flexible display and the optical sensor, wherein the at least one processor identifies information related to the size of an exposed area of the flexible display while the size of the exposed area is being changed, and controls an operation of the optical sensor to adjust the delay between a Vsync signal related to the flexible display and a sensing operation of the optical sensor on the basis of the information related to the size of the exposed area.

FIG. 8

**EP 4 682 858 A1**

**Description**

[Technical Field]

Embodiments of the disclosure relate to an electronic device including an optical sensor disposed in a display area and a method for controlling the same.

[Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

An electronic device includes at least one optical sensor to detect the surrounding environment using light.

As the bezel area of the electronic device is decreased, the optical sensor is disposed in the display area.

The above-described information may be provided as related art for the purpose of helping understanding of the disclosure. No claim or determination is made as to whether any of the foregoing is applicable as background art in relation to the disclosure.

[Detailed Description of the Invention]

[Technical Solution]

According to an embodiment, an electronic device may comprise a housing, a flexible display having at least a portion exposed to an outside through the housing, at least one optical sensor, and at least one processor operatively connected to the flexible display and the optical sensor.

According to an embodiment, the at least one processor may identify information related to a size of an exposed area of the flexible display while the size of the exposed area of the flexible display is varied.

According to an embodiment, the at least one processor may control an operation of the optical sensor to adjust a delay between a Vsync signal related to the flexible display and a sensing operation of the optical sensor based on the information related to the size of the exposed area.

According to an embodiment, a method for controlling an electronic device may comprise identifying information related to a size of an exposed area of a flexible display of the electronic device while the size of the exposed area of the flexible display is varied.

According to an embodiment, the method for controlling the electronic device may comprise controlling an operation of an optical sensor of the electronic device to adjust a delay between a Vsync signal related to the flexible display and a sensing operation of the optical sensor based on the information related to the size of the exposed area.

According to an embodiment, an electronic device may comprise a display, at least one optical sensor, and at least one processor operatively connected to the display and the optical sensor.

According to an embodiment, the at least one processor may identify that a period of a Vsync signal of the display is varied.

According to an embodiment, the at least one processor may control the optical sensor to adjust a delay between a Vsync signal related to the display and a sensing operation of the optical sensor based on the period of the Vsync signal being varied.

According to an embodiment, in a non-transitory computer-readable recording medium storing one or more programs, the one or more programs may comprise instructions for an electronic device to identify information related to a size of an exposed area of a flexible display while the size of the exposed area of the flexible display is varied.

According to an embodiment, the one or more programs may comprise instructions for the electronic device to control an operation of the optical sensor to adjust a delay between a Vsync signal related to the flexible display and a sensing operation of the optical sensor based on the information related to the size of the exposed area.

According to an embodiment, in a non-transitory computer-readable recording medium storing one or more programs, the one or more programs may comprise instructions for an electronic device to identify that a period of a Vsync signal of the display is varied.

According to an embodiment, the one or more programs may comprise instructions for the electronic device to control the optical sensor to adjust a delay between a Vsync signal related to the display and a sensing operation of the optical sensor based on the period of the Vsync signal being varied.

[Brief Description of Drawings]

FIG. 1 is a block diagram illustrating an electronic device in a network environment according to an embodiment;
FIG. 2 is a view illustrating a state in which a second display area of a display is received in a housing according to an embodiment;
FIG. 3 is a view illustrating a state in which a second display area of a display is exposed to the outside of a housing according to an embodiment;
FIG. 4 is an exploded perspective view illustrating an electronic device according to an embodiment;
FIG. 5A is a cross-sectional view taken along line A-A' of FIG. 2 according to an embodiment;
FIG. 5B is a cross-sectional view taken along line B-B' of FIG. 3 according to an embodiment;
FIG. 6A is a view illustrating an optical sensor disposed in a display area of an electronic device according to an embodiment;
FIG. 6B is a view illustrating a simplified configuration of an electronic device according to an embodiment;
FIG. 6C is a view illustrating a placement structure of an optical sensor according to an embodiment;
FIG. 7 is a flowchart illustrating an operation of controlling an optical sensor based on a size of an exposed area of a flexible display of an electronic device according to an embodiment;
FIG. 8 is a flowchart illustrating an operation of controlling an optical sensor based on at least one of a change in the size of an exposed area or a scan rate change of a flexible display of an electronic device according to an embodiment;
FIG. 9 is a view illustrating a scan rate change and extension/contraction operation of a flexible display of an electronic device according to an embodiment;
FIG. 10 is a view illustrating an extension/contraction operation of an upper end without a scan rate change of a flexible display of an electronic device according to an embodiment;
FIG. 11A is a view illustrating an operation of a proximity sensor when a flexible display of an electronic device is in a contracted state according to an embodiment;
FIG. 11B is a view illustrating an operation timing of the proximity sensor of FIG.11A;
FIG. 12A is a view illustrating an operation of a proximity sensor when an upper end of a flexible display of an electronic device is extended without a scan rate change according to an embodiment;
FIG. 12B is a view illustrating an operation timing of the proximity sensor of FIG. 12A;
FIG. 13 is a view illustrating an operation of a proximity sensor according to an extension/contraction operation of an upper end without a scan rate change of a flexible display of an electronic device according to an embodiment;
FIG. 14 is a view illustrating an extension/contraction operation of a lower end without a scan rate change of a flexible display of an electronic device according to an embodiment;
FIG. 15A is a view illustrating an operation of a proximity sensor when a lower end of a flexible display of an electronic device is extended without a scan rate change according to an embodiment;
FIG. 15B is a view illustrating an operation timing of the proximity sensor of FIG. 15A;
FIG. 16 is a view illustrating an operation of a proximity sensor according to an extension/contraction operation of a lower end without a scan rate change of a flexible display of an electronic device according to an embodiment;
FIG. 17 is a view illustrating an operation of a proximity sensor according to a scan rate change and an extension/-contraction operation of an upper end of a flexible display of an electronic device according to an embodiment;
FIG. 18 is a view illustrating an operation of a proximity sensor according to a scan rate change and an extension/-contraction operation of a lower end of a flexible display of an electronic device according to an embodiment;
FIG. 19 is a view illustrating an operation of an illuminance sensor according to an extension/contraction operation of an upper end without a scan rate change of a flexible display of an electronic device according to an embodiment;
FIG. 20 is a view illustrating an operation of an illuminance sensor according to an extension/contraction operation of a lower end without a scan rate change of a flexible display of an electronic device according to an embodiment;
FIG. 21 is a view illustrating an operation of an illuminance sensor according to a scan rate change and an extension/contraction operation of an upper end of a flexible display of an electronic device according to an embodiment; and
FIG. 22 is a view illustrating an operation of an illuminance sensor according to a scan rate change and an extension/contraction operation of a lower end of a flexible display of an electronic device according to an embodiment.

[Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

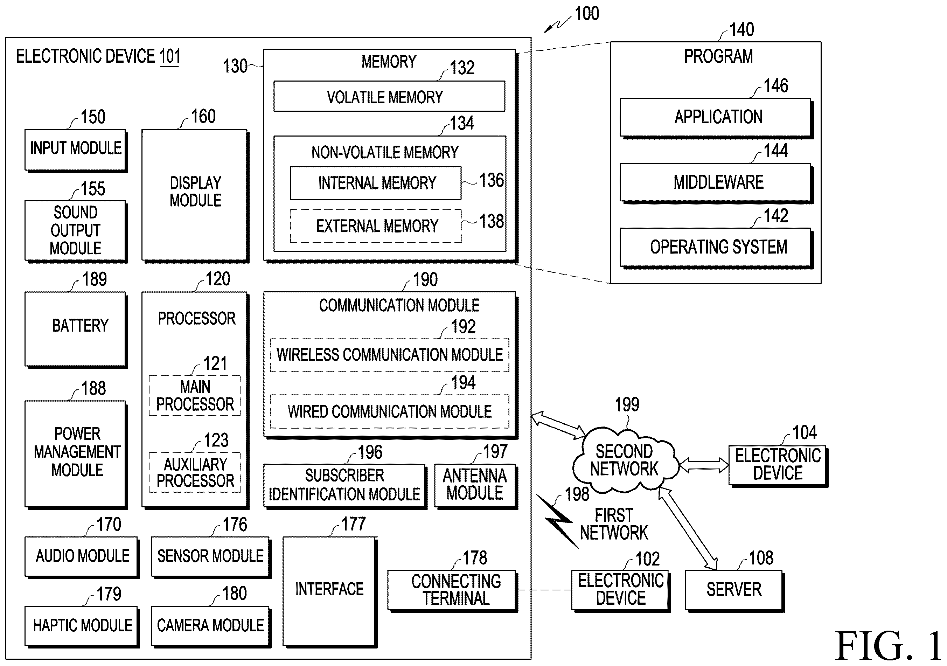

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108.According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197.In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software(e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101.The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101.The input module 150 may include, for example, a microphone, a mouse, a keyboard, keys (e.g., buttons), or a digital pen (e.g., a stylus pen).

The sound output module 155 may output sound signals to the outside of the electronic device 101.The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101.The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101.According to an embodiment, the power management module 188 may be implemented as at least part of, for example, a power management integrated circuit (PMIC).

The battery 189 may supply power to at least one component of the electronic device 101.According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module).A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)).These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

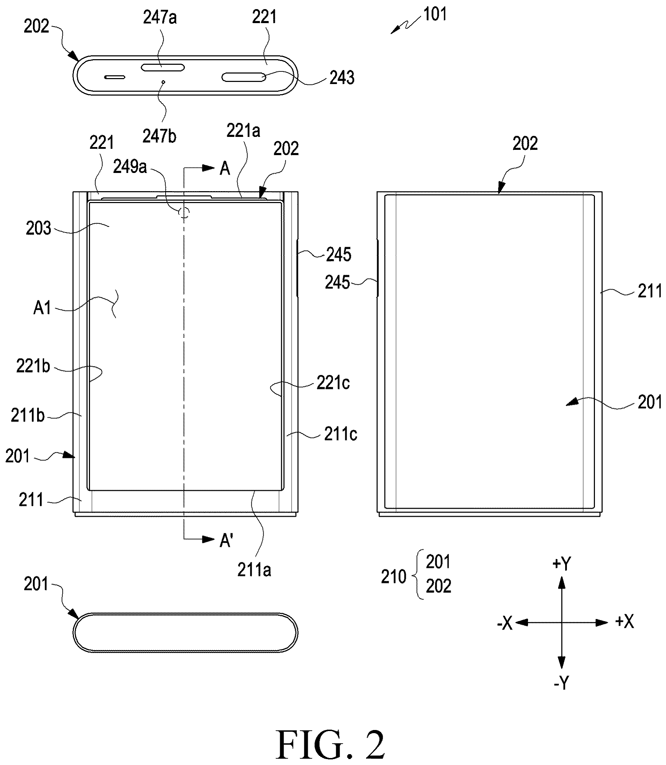

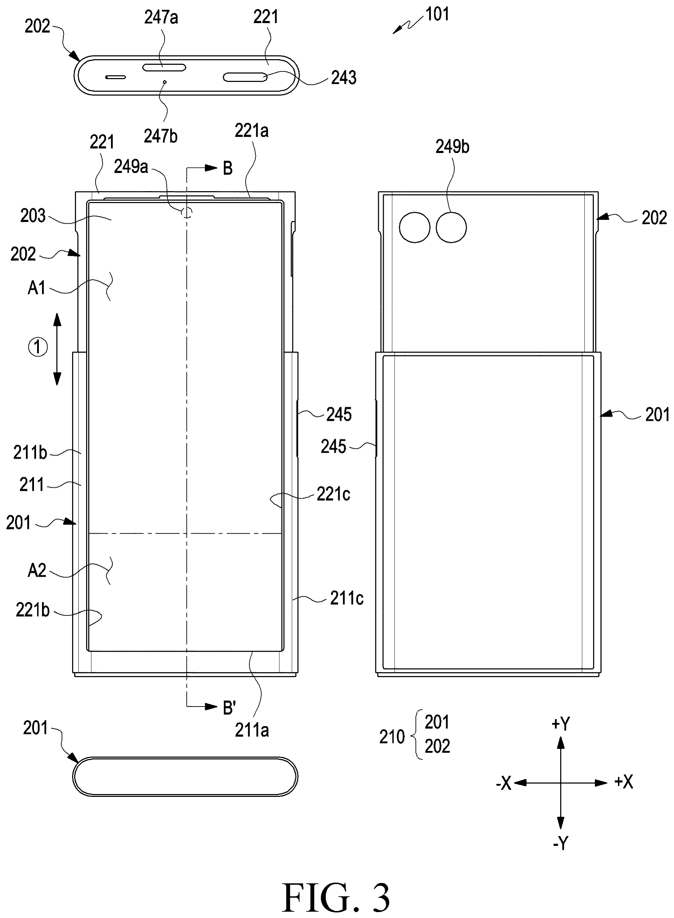

FIG. 2 is a view illustrating a state in which a second display area of a display is received in a housing according to an embodiment. FIG. 3 is a view illustrating a state in which a second display area of a display is exposed to the outside of a housing according to an embodiment;

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state shown in FIG. 2 may be referred to as a closed state of the electronic device 101 or housing 210 and a slide-in state of the display 203.

The state shown in FIG. 3 may be referred to as an opened state of the electronic device 101 or housing 210 and a slide-out state of the display 203.

Referring to FIGS. 2 and 3, the electronic device 101 may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to an embodiment, the second housing 202 may be referred to as a slide portion or a slide housing, and may be movable relative to the first housing 201. According to an embodiment, the second housing 202 may receive various electrical/electronic components, such as a circuit board or a battery.

According to an embodiment, the first housing 201 may have, disposed therein, a motor, a speaker, a sim socket, and/or a sub circuit board electrically connected with a main circuit board. The second housing 202 may receive a main circuit board on which electronic components, such as an application processor (AP) and a communication processor (CP) are mounted.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

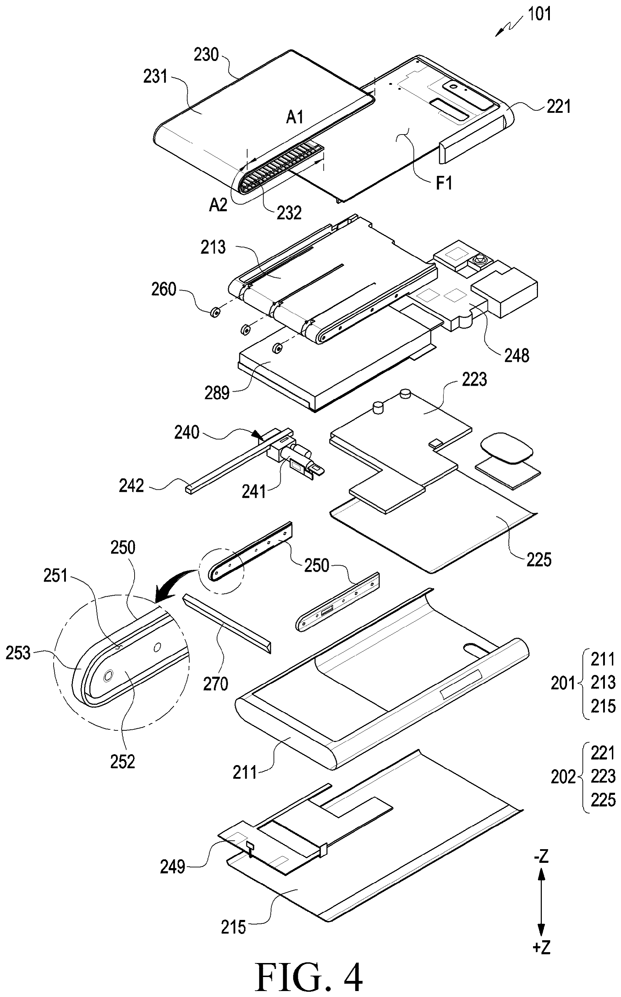

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to an embodiment, as the second housing 202 moves in a first direction (e.g., direction ①) parallel to the 1-2th sidewall 211b or the 1-3th sidewall 211c, the housing 210 may form an opened state and a closed state. In the closed state, the second housing 202 may be positioned at a first distance from the 1-1th sidewall 211a and, in the opened state, the second housing 202 may be moved to be positioned at a second distance larger than the first distance from the 1-1th sidewall 211a. In some embodiments, in the closed state, the first housing 201 may surround a portion of the 2-1th side wall 221a.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may include a first display area A1 configured to remain exposed and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides relative to the first housing 201, the second display area A2 may be received in the first housing 201 (e.g., the slide-in state) or be visually exposed to the outside of the electronic device 101 (e.g., the slide-out state).

According to an embodiment, the second display area A2 may be received in the space positioned inside the first housing 201 or exposed to the outside of the electronic device while being substantially guided by one area (e.g., the curved surface 213a of FIG. 4) of the first housing 201. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to an embodiment, when viewed from above the second cover member 221 (e.g., front cover), if the electronic device 210 changes from the closed state to opened state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or opened state of the housing 210, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in one area of the first housing 201. Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

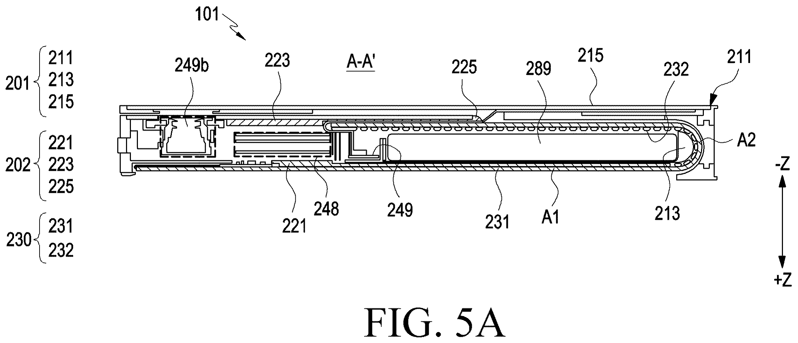

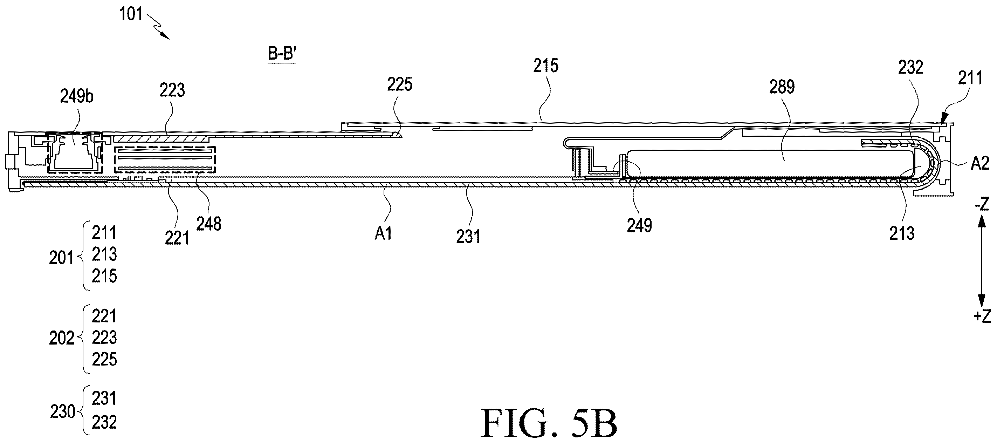

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202.

According to an embodiment, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view illustrating an electronic device according to an embodiment;
FIG. 5A is a cross-sectional view taken along line A-A' of FIG. 2 according to an embodiment;
FIG. 5B is a cross-sectional view taken along line B-B' of FIG. 3 according to an embodiment;
Referring to FIGS. 4, 5A, and/or 5B, an electronic device 101 may include a first housing 201, a second housing 202, a display assembly 230, and a driving structure 240. The configuration of the first housing 201, the second housing 202, and the display assembly 230 of FIGS. 4, 5A, and/or 5B may be identical in whole or part to the configuration of the first housing 201, the second housing 202, and the display 203 of FIGS. 2 and/or 3.

According to an embodiment, the first housing 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing 202. According to an embodiment, the second circuit board 249 receiving the electronic component (e.g., the processor 120 and/or the memory 130 of FIG. 1) may be connected to the first cover member 211.

According to an embodiment, the frame 213 may be connected to the first cover member 211. For example, the frame 213 may be connected to the first cover member 211. The second housing 202 is movable relative to the first cover member 211 and/or the frame 213. According to an embodiment, the frame 213 may accommodate the battery 289. According to an embodiment, the frame 213 may include a curved portion 213a facing the display assembly 230.

According to an embodiment, the first rear plate 215 may substantially form at least a portion of the exterior of the first housing 201 or the electronic device 101. For example, the first rear plate 215 may be coupled to the outer surface of the first cover member 221. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ① in FIG. 3).

According to an embodiment, the second cover member 221 may support at least a portion of the display 203. For example, the second cover member 221 may include a first surface F1. The first display area A1 of the display 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 231. According to an embodiment, the display 231 may be referred to as a flexible display, a foldable display, and/or a rollable display.

According to an embodiment, the multi-bar structure 232 may be connected to or attached to at least a portion (e.g., the second display area A2) of the display 231. According to an embodiment, as the second housing 202 slides, the multi-bar structure 232 may move with respect to the first housing 201. In the closed state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing 202 relative to the first housing 201. For example, the drive structure 240 may include a motor 241 configured to generate a driving force for sliding the housing 201 and 202. The driving structure 240 may include a gear (e.g., a pinion) connected to the motor 241 and a rack 242 configured to mesh with the gear.

According to an embodiment, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to an embodiment, the second housing 202 may accommodate the first circuit board 248 (e.g., a main board). According to an embodiment, the processor, memory, and/or interface (e.g., the interface 177 of FIG. 1) may be mounted on the first circuit board 248. The processor may include one or more of, e.g., a central processing unit, an application processor, a graphic processing device, an image signal processing, a sensor hub processor, or a communication processor. According to an embodiment, the first circuit board 248 may include a flexible printed circuit board type radio frequency cable (FRC). The first circuit board 248 may be disposed on at least a portion of the second cover member 221 and may be electrically connected to the antenna module and the communication module.

According to an embodiment, the memory may include a volatile memory (e.g., the volatile memory 132 of FIG. 1) or a non-volatile memory (e.g., the non-volatile memory 134 of FIG. 1).

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a connection flexible board. The second circuit board 249 may be electrically connected with electronic components disposed in an end area of the electronic device 101, such as the battery 289 or a speaker and/or a sim socket, and may transfer signals and power. According to an embodiment, the second circuit board 249 may receive a wireless charging antenna (e.g., coil). For example, the battery 289 may receive power from an external electronic device through the wireless charging antenna. As another example, the battery 289 may transfer power to the external electronic device by the wireless charging antenna.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to an embodiment, the battery 289 may be positioned in a frame 213, and the battery 289 may be slid along with the frame 213.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to an embodiment, the guide rail 250 may provide pressure to the multi-bar structure 233 based on the driving of the motor 241.

According to an embodiment, when the electronic device 101 changes from the closed state to opened state, the inner portion 252 of the guide rail 250 may provide pressure to the multi-bar structure 232. The multi-bar structure 232 receiving the pressure may be moved along the slit 251 of the guide rail 250, and the second housing 202 may be changed from the slide-in state to slide-out state with respect to the first housing 201. At least a portion of the display assembly 230 accommodated between the first cover member 211 and the frame 213 may be extended to the front surface.

According to an embodiment, when the electronic device 101 changes from the opened state to closed state, an outer portion 253 of the guide rail 250 may provide pressure to the bent multi-bar structure 232. The multi-bar structure 232 receiving the pressure may be moved along the slit 251 of the guide rail 250, and the second housing 202 may be changed from the slide-out state to slide-in state with respect to the first housing 201. At least a portion of the display assembly 230 may be accommodated between the first cover member 211 and the frame 213.

Referring to FIG. 5A, in the closed state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be minimized. For example, if the second housing 202 is fully received in the first housing 201, the first display area A1 of the display 231 may be visually exposed, and the second display area A2 may not be visually exposed. At least a portion of the second display area A2 may be disposed between the battery 289 and the rear plate 215 and 225.

Referring to FIG. 5B, in the opened state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

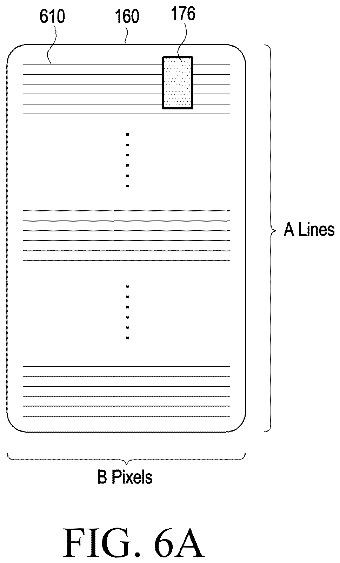

FIG. 6A is a view illustrating an optical sensor disposed in a display area of an electronic device according to an embodiment.

Referring to FIG. 6A, an electronic device (e.g., the electronic device 101 of FIG. 1) may include a display 160 (e.g., the display module 160 of FIG. 1) and an optical sensor 176 (e.g., the sensor module 176 of FIG. 1) disposed on a rear surface of the display 160 to overlap the display 160. According to an embodiment, the display 160 may include a plurality of scan lines (e.g., A lines) for image display. According to an embodiment, each scan line 610 may include B pixels. For example, the display 160 may be in an array form constituted of B x A pixels. For example, the display 160 may be an array of 1920 x 1080 for full HD resolution or an array of 2560 x 1440 for QHD.

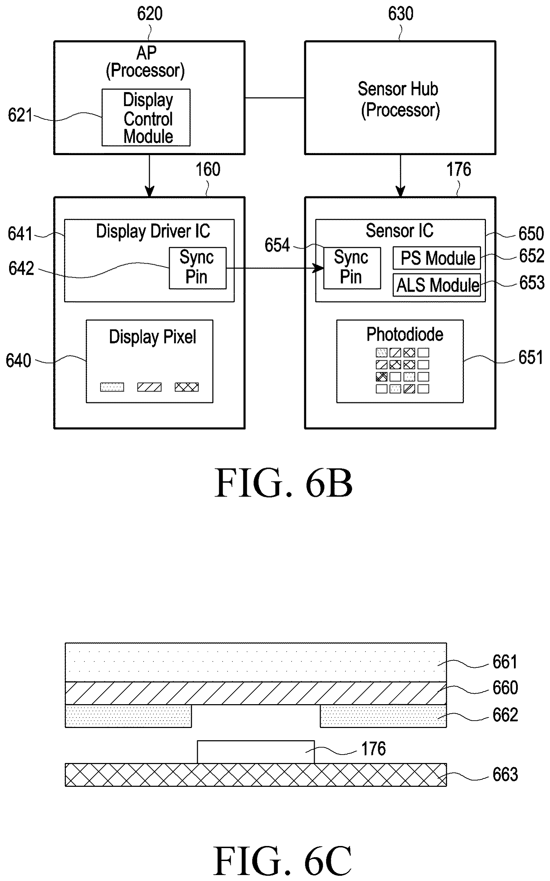

According to an embodiment, the optical sensor 176 may be disposed to overlap at least one scan line 610 among the plurality of scan lines of the display 160. According to an embodiment, the optical sensor 176 may overlap some pixels among a plurality of pixels included in the at least one scan line 610. According to an embodiment, the optical sensor 176 may be positioned on a rear layer (or lower layer) of the display 160, and the at least one scan line 610 may be substantially disposed above the optical sensor 176. According to an embodiment, the placement structure of the optical sensor 176 and the display 160 is described below in more detail with reference to FIG. 6C.

According to an embodiment, the optical sensor 176 may include at least one of a proximity sensor or an illuminance sensor.

According to an embodiment, the proximity sensor may include a light emitting unit that outputs light. When the light emitting unit of the proximity sensor mounted on the rear surface of the display 160 outputs light, a problem may occur where a spot is visible on the display 160. The spot may be due to a photoelectric effect that causes leakage in display elements (e.g., OLED) included in the display 160 due to light from the proximity sensor.

According to an embodiment, to minimize the photoelectric effect, the light emitting unit of the proximity sensor may operate in a front porch interval where all display elements included in the display 160 are turned off. For example, the light emitting unit of the proximity sensor may detect a Vsync signal generated from the display 160 and then emit light after $t_{PSDelay}$ to output light in the front porch interval. According to an embodiment, $t_{PSDelay}$ may be a delay from when the Vsync signal is detected until the light emitting unit of the proximity sensor (PS) operates.

According to an embodiment, when the display 160 is extended while the scan rate of the display 160 is fixed, the interval when display elements included in the display 160 are turned on increases due to an increase in the number of scan lines, and the front porch interval when all display elements are turned off decreases, so a photoelectric effect may occur if the $t_{PSDelay}$ before extension of the display 160 is applied. According to an embodiment, according to extension of the display 160, the delay from when the Vsync signal is detected until the light emitting unit of the proximity sensor operates may need to be adjusted.

According to an embodiment, when the scan rate of the display 160 is changed, a photoelectric effect may occur if the $t_{PSDelay}$ before the scan rate change is applied. According to an embodiment, according to a scan rate change of the display 160, the delay from when the Vsync signal is detected until the light emitting unit of the proximity sensor operates may need to be adjusted.

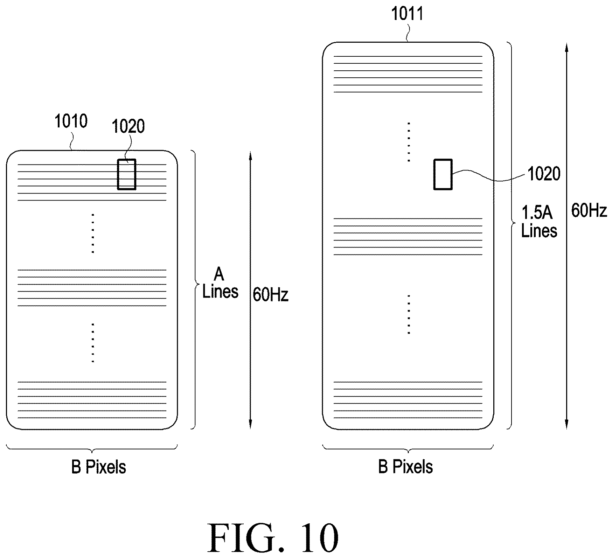

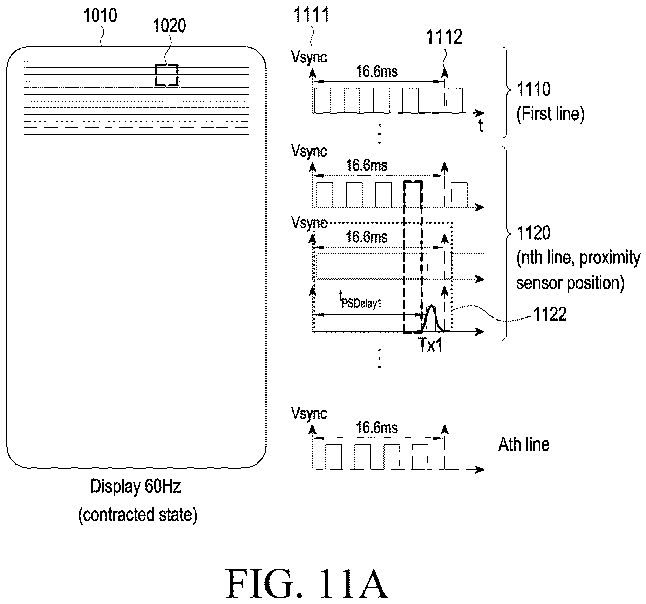

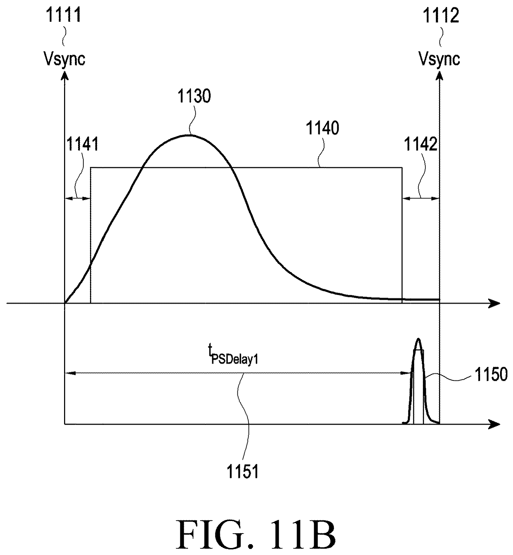

According to an embodiment, the operation of the proximity sensor is described below in more detail with reference to FIGS. 10 to 18. According to an embodiment, the front porch is described below in more detail with reference to FIGS. 11A and 11B.

According to an embodiment, the illuminance sensor may include a light receiving unit (e.g., photodiode) for detecting ambient light. Since the illuminance sensor mounted on the rear surface of the display 160 is affected by light generated from the display 160, it should operate in an interval when the display element is turned off to measure ambient light. For example, the light receiving unit of the illuminance sensor may detect a Vsync signal generated from the display 160, then perform measurement for $t_{IT}$ time after $t_{Als}$ time, stop measurement for $t_{Wait}$ time, and then repeat the operation of measuring again for $t_{IT}$ time. According to an embodiment, $t_{Als}$ may be a delay from when the Vsync signal is detected until the light receiving unit of the ambient light sensor (ALS) operates.

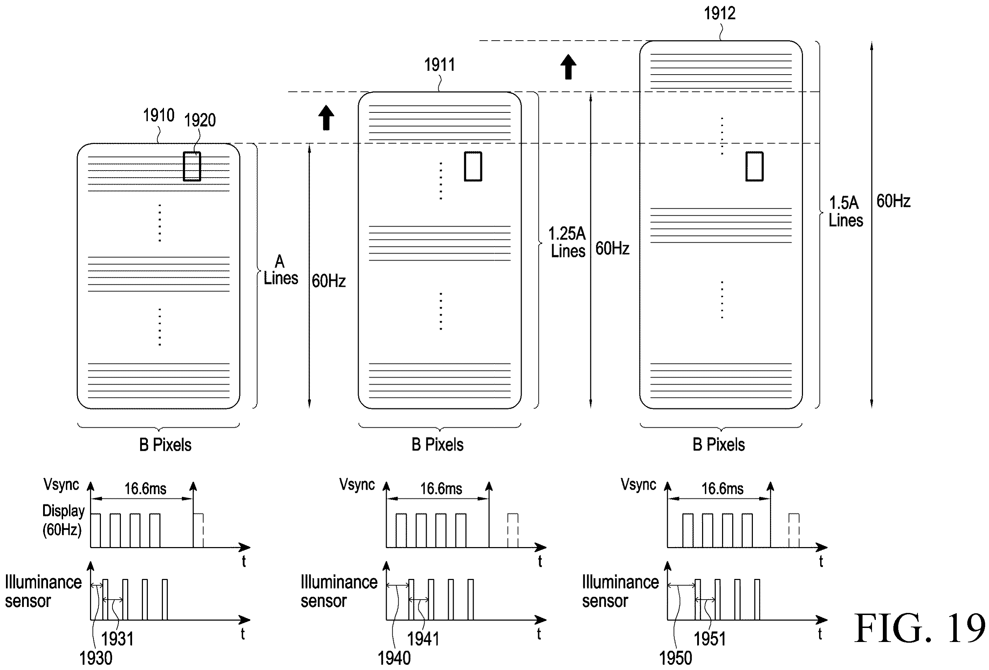

According to an embodiment, the illuminance sensor may generate optical noise due to light generated from display elements as the timing when display elements are turned off also changes according to a change in at least one of the extension/contraction or scan rate of the display 160. According to an embodiment, according to a change in at least one of the extension/contraction or scan rate of the display 160, the delay from when the Vsync signal is detected until the light receiving unit of the illuminance sensor operates and the operation period may need to be adjusted. According to an embodiment, the operation of the illuminance sensor is described below with reference to FIGS. 19 to 22.

FIG. 6B is a view illustrating a simplified configuration of an electronic device according to an embodiment.

Referring to FIG. 6B, an electronic device (e.g., the electronic device 101 of FIG. 1) may include a display 160, an application processor (AP) (e.g., the processor 120 of FIG. 1) for controlling the display 160, an optical sensor 176, and a sensor hub 630 (e.g., the processor 120 of FIG. 1) for controlling the optical sensor 176.

According to an embodiment, the AP 620 may include a display control module 621 for controlling the display 160. For example, the display control module 621 may be a circuit for controlling the display 160 or software stored in memory (e.g., the memory 130 of FIG. 1).

According to an embodiment, the display 160 may include a display driver integrated circuit (DDI) 641 that controls operation of the display 160 and display pixels 640. According to an embodiment, the display pixels 640 may include a plurality of pixels in each of the scan lines, as illustrated in FIG. 6A.

According to an embodiment, the DDI 641 may receive image information including, e.g., image data or image control signals corresponding to commands for controlling the image data from other components of the electronic device (e.g., a processor).

According to an embodiment, the DDI 641 may turn on or off the display pixels 640 and adjust brightness by controlling on/off time. According to an embodiment, the DDI 641 may sequentially turn on/off from the first scan line to the last scan line of the display 160 and may generate a Vsync signal to synchronize the time of each scan line.

According to an embodiment, the DDI 641 may include a Sync pin 642 that is hardware-wise connected to a Sync pin 654 of a sensor IC 650 included in the sensor 176. According to an embodiment, the sensor IC 650 may detect the Vsync signal generated by the DDI 641 through the Sync pin 654 connected to the Sync pin 642 of the DDI 641.

According to an embodiment, the sensor hub 630 may control the optical sensor 176. According to an embodiment, although the sensor hub 630 is illustrated as a separate component from the AP 620 in FIG. 6B, it is not limited thereto, and the sensor hub 630 may be a module included in the AP 620.

According to an embodiment, the optical sensor 176 may include all types of sensors that emit light or use light intensity by receiving light, such as infrared (IR) (proximity/gesture), RGB sensor, illuminance sensor (ambient light sensor (ALS)), ultraviolet (UV) sensor, and iris sensor.

According to an embodiment, the optical sensor 176 may include a sensor IC 650 that controls the operation of the optical sensor 176 and photodiodes 651. According to an embodiment, the sensor IC 650 may include a proximity sensor module (PS module) 652 for controlling a proximity sensor among the optical sensors 176, an illuminance sensor module (ambient light sensor module (ALS module)) 653 for controlling an illuminance sensor among the optical sensors 176, and a Sync pin 654 connected to the Sync pin 642 of the DDI 641.

According to an embodiment, the sensor IC 650 may detect the Vsync signal generated from the DDI 641 through the Sync pin 654. According to an embodiment, the sensor IC 650 may control the proximity sensor module 652 based on the detected Vsync signal to control light emission timing (e.g., delay after Vsync signal detection). According to an embodiment, the sensor IC 650 may control the illuminance sensor module 653 based on the detected Vsync signal to control operation timing (e.g., delay after Vsync signal detection and operation period) of the photodiodes 651.

According to an embodiment, the sensor IC 650 may receive an operation command based on at least one of information related to the size of the exposed area of the display 160 or scan rate change information from the sensor hub 630. According to an embodiment, the operation command may be received by the sensor hub 630 from the AP 620. According to an embodiment, the sensor IC 650 may adjust at least one of light emission delay or light reception delay/period from the Vsync signal detected through the Sync pin 654 based on the received operation command.

According to an embodiment, the sensor IC 650 may receive at least one of information related to the size of the exposed area of the display 160 or scan rate change information from the sensor hub 630. According to an embodiment, the information related to the size of the exposed area of the display 160 and the scan rate change information may be received by the sensor hub 630 from the AP 620. According to an embodiment, the sensor IC 650 may adjust at least one of light emission delay or light reception delay/period from the Vsync signal detected through the Sync pin 654 based on at least one of the received information related to the size of the exposed area or scan rate change information.

According to an embodiment, when the scan rate of the display 160 is changed, the sensor IC 650 may detect the changed period of the Vsync signal detected through the Sync pin 654 and adjust at least one of light emission timing or light reception timing based on the changed period.

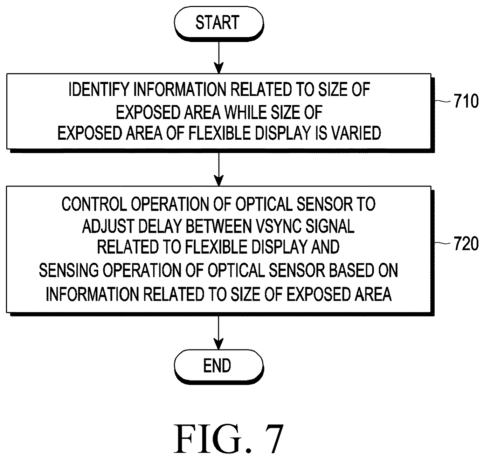

According to an embodiment, the operation of adjusting at least one of light emission delay or light reception delay/period of the sensor 176 is described below in more detail with reference to FIGS. 7 to 22.

FIG. 6C is a view illustrating a placement structure of an optical sensor according to an embodiment.

Referring to FIG. 6C, the optical sensor 176 may be mounted on a circuit board 663 (e.g., PCB board) disposed on a rear layer (or lower layer) of the display. According to an embodiment, the display may include a display panel 660 and may include at least one of a glass 661 disposed on an upper layer of the display panel 660 for protecting the display panel 660 or a cover panel 662 disposed on a lower layer of the display panel 660 for protecting the display panel 660. According to an embodiment, the cover panel 662 may include a copper (Cu) layer or a black embossed layer, and may not transmit light.

According to an embodiment, the cover panel 662 may have some areas opened based on a field of view (FOV) of the optical sensor 176 so that light emitted from the optical sensor 176 disposed on the rear surface of the display may be transmitted to the outside or external light may be received by the optical sensor 176.

According to an embodiment, as the optical sensor 176 is disposed under the display, light emitted from the optical sensor 176 or light received by the optical sensor 176 should necessarily pass through the display panel 660, so it may be affected by display signals. Hereinafter, operation of the optical sensor 176 for reducing interference from display signals is described.

FIG. 7 is a flowchart illustrating an operation of controlling an optical sensor based on a size of an exposed area of a flexible display of an electronic device according to an embodiment.

In the following embodiment, each operation may be sequentially performed, but is not necessarily performed sequentially. For example, the order of the operations may be changed, and at least two operations may be performed in parallel.

Referring to FIG. 7, in operation 710, an electronic device (e.g., the electronic device 101 of FIG. 1 or the processor 120 of FIG. 1) may identify information related to the size of an exposed area while the size of the exposed area of a flexible display (e.g., the display module 160 of FIG. 1) is varied.

According to an embodiment, the size of the exposed area may be extended or contracted.

According to an embodiment, the information related to the size of the exposed area may include at least one of the number of scan lines included in the exposed area or a varied length of the exposed area.

According to an embodiment, in operation 720, the electronic device may control the operation of the optical sensor to adjust a delay between a Vsync signal related to the flexible display and a sensing operation of the optical sensor (e.g., the sensor module 176 of FIG. 1) based on the information related to the size of the exposed area.

According to an embodiment, the optical sensor may include at least one of a proximity sensor or an illuminance sensor.

According to an embodiment, when the optical sensor includes a proximity sensor, the optical sensor may include a light emitting unit and a light receiving unit (e.g., photodiode) that detects light emitted from the light emitting unit.

According to an embodiment, based on at least one of a case where the length of the flexible display is extended or a case where the scan rate is changed in a state in which a proximity sensor is mounted at a fixed position, an operation delay of the light emitting unit of the proximity sensor may be adjusted.

According to an embodiment, the electronic device may control the operation of the optical sensor so that the delay is increased based on an increase in the number of scan lines included in the exposed area. According to an embodiment, the electronic device may identify that an interval when a display signal is not applied to scan lines included in the exposed area is decreased based on an increase in the number of scan lines included in the exposed area. According to an embodiment, the electronic device may control the operation of the optical sensor to perform a sensing operation (e.g., light emission operation) in an interval before a Vsync signal included in the decreased interval is applied in the decreased interval.

According to an embodiment, the electronic device may control the operation of the optical sensor to adjust the delay in proportion to a ratio of a first period and a second period while a period of the Vsync signal is changed from the first period to the second period. For example, the electronic device may control the operation of the light emitting unit to adjust the delay in proportion to a ratio of the first period and the second period.

According to an embodiment, a scan rate (or frame rate, refresh rate) is the number of still images displayed per second, its unit is Hz, and the reciprocal of the scan rate may be the period of the Vsync signal.

According to an embodiment, the period of the Vsync signal may be changed based on at least one of manufacturer settings, types of executed applications, or types of displayed content. For example, when conditions set by the manufacturer are met, the period of the Vsync signal may be changed. According to an embodiment, when smooth video playback is required, such as in game (or video) applications, the scan rate may increase and the period of the Vsync signal may be shortened. According to an embodiment, the electronic device may increase the scan rate when displayed content is a video and decrease the scan rate when it is a still image.

According to an embodiment, operation timing $t_{PSDelay}$ of the light emitting unit of the proximity sensor may follow Equation (1) below.

$$t_{PSDelay} = t_{PSRef} + W_{PS} \times t_{PSRef} \qquad \text{Equation (1)}$$

Here, $t_{PSRef}$ is the delay timing of the light emitting unit of the proximity sensor before extension of the exposed area. According to an embodiment, the delay timing may be a time between when the Vsync signal is detected and when the light emitting unit of the proximity sensor operates.

According to an embodiment, $W_{PS}$ is a weight of delay of the light emitting unit of the proximity sensor corresponding to the number of display scan lines and display scan rate of the exposed area. According to an embodiment, $W_{PS}$ may be defined as a positive or negative number according to display scan lines and scan rate included in the exposed area.

According to an embodiment, operation of the proximity sensor based on at least one of a change in the size of the exposed area of the flexible display or a scan rate change is described below in more detail with reference to FIGS. 11A to 18.

According to an embodiment, when the optical sensor includes an illuminance sensor, the optical sensor may include a light receiving unit (e.g., photodiode) that detects ambient light of the electronic device.

According to an embodiment, the optical sensor may control the light receiving unit to operate with a delay and period corresponding to an interval when a display signal of the flexible display is turned off.

According to an embodiment, the electronic device may adjust the delay of the light receiving unit based on a change in the size of the exposed area. According to an embodiment, the electronic device may adjust an operation period of the light receiving unit based on at least one of a change in the size of the exposed area or a scan rate change.

According to an embodiment, the electronic device may control the operation of the optical sensor to adjust the delay and period based on a ratio change in the number of scan lines according to an increase in the size of the exposed area without a scan rate change. For example, the electronic device may control the operation of the light receiving unit to adjust the delay and period.

According to an embodiment, the electronic device may control the operation of the optical sensor to adjust the delay further considering a distance based on a change in distance between an upper end of the exposed area and the optical sensor according to a change in the size of the exposed area. For example, when the distance between the upper end of the exposed area and the optical sensor increases as the exposed area extends in the upper direction, the on timing of display pixels affecting the optical sensor is delayed, so the delay may be adjusted so that the operation timing of the light receiving unit is also delayed.

According to an embodiment, the electronic device may control the operation of the optical sensor to adjust the delay and period in proportion to a ratio of a first period and a second period while a period of the Vsync signal is changed from the first period to the second period.

According to an embodiment, a scan rate (or frame rate, refresh rate) is the number of still images displayed per second, its unit is Hz, and the reciprocal of the scan rate may be the period of the Vsync signal.

For example, when the display scan rate is increased, the period of the Vsync signal decreases, and the time when display elements are turned on and off also decreases, so the electronic device may control the operation of the light receiving unit of the illuminance sensor to be inversely proportional to the scan rate change ratio while the scan rate is changed.

According to an embodiment, operation timing $t_{ALSDelay}$ of the light receiving unit of the illuminance sensor may follow Equation (2) below.

$$t_{ALSDelay} = t_{ALSRef} + W_{ALSDelay} \times t_{ALSRef}$$

Equation (2)

Here, $t_{ALSRef}$ is the delay timing of the light receiving unit of the illuminance sensor before extension/contraction of the exposed area and scan rate change. According to an embodiment, the delay timing may be a time between when the Vsync signal is detected and when the light receiving unit of the illuminance sensor operates.

According to an embodiment, $W_{ALSDelay}$ is a weight of delay of the light receiving unit of the illuminance sensor corresponding to the number of display scan lines and display scan rate of the exposed area. According to an embodiment, $W_{ALSDealy}$ may be defined as a positive or negative number according to display scan lines and scan rate included in the exposed area.

According to an embodiment, operation period $t_{ALSPeriod}$ of the light receiving unit of the illuminance sensor may follow Equation (3) below.

$$t_{ALSPeriod} = t_{ALSPRef} + W_{ALSP} \times t_{ALSPRef}$$

Equation (3)

Here, $t_{ALSRef}$ may be an operation period of the light receiving unit of the illuminance sensor before extension/contraction of the exposed area and scan rate change.

According to an embodiment, $W_{ALSP}$ is a weight of operation period of the light receiving unit of the illuminance sensor corresponding to the number of display scan lines and display scan rate of the exposed area. According to an embodiment, $W_{ALSP}$ may be defined as a positive or negative number according to display scan lines and scan rate included in the exposed area.

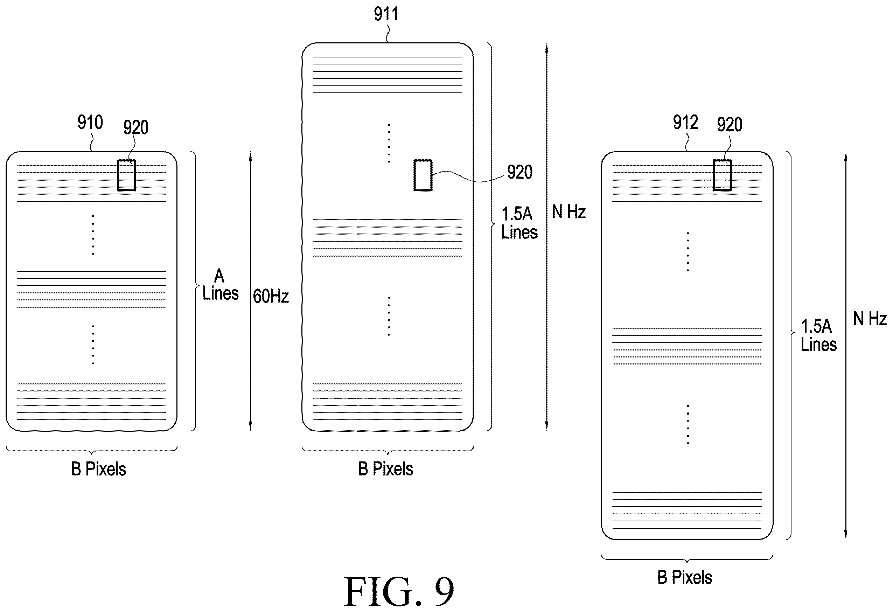

According to an embodiment, operation of the illuminance sensor based on at least one of a change in the size of the exposed area of the flexible display or a scan rate change is described below in more detail with reference to FIGS. 9 to 22.

Although it has been described above that the optical sensor adjusts the delay and period of the optical sensor by control of the electronic device, it is not limited thereto. According to an embodiment, the optical sensor may autonomously adjust the delay and/or period of the light emitting unit or light receiving unit based on received scan rate change information or scan line number change information.

As such, when the optical sensor is positioned on the rear surface of the display, photoelectric effects or optical noise may be avoided by adjusting at least one of delay or operation period of the optical sensor based on at least one of the number of scan lines of the exposed area of the display or the number of display scan lines.

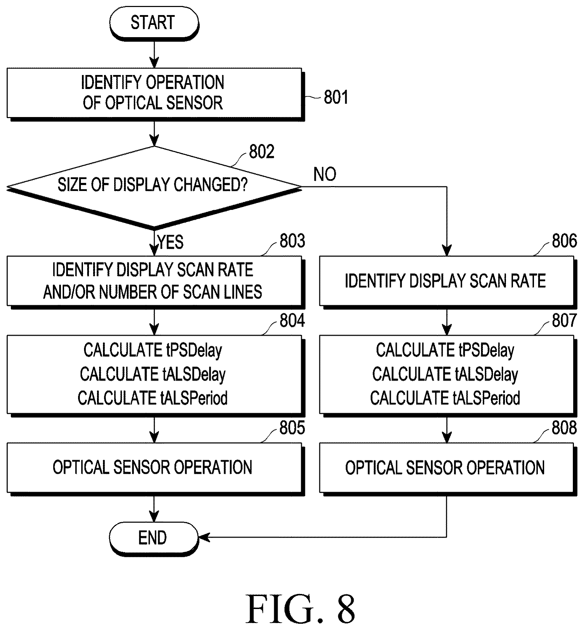

FIG. 8 is a flowchart illustrating an operation of controlling an optical sensor based on at least one of a change in the size of an exposed area or a scan rate change of a flexible display of an electronic device according to an embodiment.

In the following embodiment, each operation may be sequentially performed, but is not necessarily performed sequentially. For example, the order of the operations may be changed, and at least two operations may be performed in parallel.

Referring to FIG. 8, in operation 801, an electronic device (e.g., the electronic device 101 of FIG. 1 or the processor 120 of FIG. 1) may operate an optical sensor (e.g., the sensor module 176 of FIG. 1). According to an embodiment, when operation of the optical sensor is required by system control or application control, the electronic device may operate the optical sensor. For example, the optical sensor may include at least one of a proximity sensor or an illuminance sensor.

According to an embodiment, in operation 802, the electronic device may identify whether the size of a display (e.g., the display module 160 of FIG. 1) is changed. For example, when the display is a flexible display, the electronic device may identify whether the size of the exposed area is extended or contracted. For example, the electronic device may identify that the size of the display is changed when a processor transmits a command for extension or contraction of the exposed area to the display or when extension or contraction of the exposed area is detected by a sensor (e.g., the sensor module 176 of FIG. 1).

According to an embodiment, when there is no command for extension or contraction of the exposed area of the flexible display, or extension or contraction of the exposed area is not detected, or the display is not a flexible display, the electronic device may identify that the size of the display is not changed.

According to an embodiment, when the size of the display is changed (operation 802-Yes), in operation 803, the electronic device may identify the display scan rate and/or the number of scan lines. For example, the electronic device may identify the changed number of scan lines according to a change in the size of the exposed area of the display. According to an embodiment, the electronic device may identify the changed scan rate based on satisfaction of set conditions (e.g., manufacturer settings, application types, content types). According to an embodiment, the scan rate is the number of still images displayed per second, its unit is Hz, and the reciprocal of the scan rate may be the period of the Vsync signal.

According to an embodiment, in operation 804, the electronic device may calculate at least one of $t_{PSDelay}$, $t_{ALSDelay}$, or $t_{ALSPeriod}$ based on the scan rate of the display and/or the number of scan lines of the exposed area. According to an embodiment, $t_{PSDelay}$, $t_{ALSDelay}$ or $t_{ALSPeriod}$ may be calculated based on Equations (1) to (3).

According to an embodiment, at least one of $t_{PSDelay}$, $t_{ALSDelay}$, or $t_{ALSPeriod}$ may be calculated by the processor or the optical sensor of the electronic device.

According to an embodiment, the electronic device may operate the optical sensor in operation 805. For example, when the optical sensor is a proximity sensor, the light emitting unit of the optical sensor may be controlled based on $t_{PSDelay}$ calculated in operation 804. For example, the electronic device may input the calculated $t_{PSDelay}$ to a register of the proximity sensor, and the proximity sensor may operate the light emitting unit, $t_{PSDelay}$ after detecting Vsync of the display. According to an embodiment, operation of the proximity sensor is described below with reference to FIGS. 10 to 18.

According to an embodiment, when the optical sensor is an illuminance sensor, the light receiving unit of the optical sensor may be controlled based on at least one of $t_{ALSDelay}$ or $t_{ALSPeriod}$ calculated in operation 804. For example, the electronic device may input at least one of the calculated $t_{ALSDelay}$ or $t_{ALSPeriod}$ to a register of the illuminance sensor, and the illuminance sensor may operate the light receiving unit at a period of $t_{ALSPeriod}$, $t_{ALSDelay}$ after detecting Vsync of the display. According to an embodiment, operation of the illuminance sensor is described below with reference to FIGS. 19 to 22.

According to an embodiment, when the size of the display is not changed (operation 802-No), in operation 806, the electronic device may identify the scan rate of the display. According to an embodiment, the electronic device may identify the changed scan rate based on satisfaction of set conditions (e.g., manufacturer settings, application types, content types).

According to an embodiment, in operation 807, the electronic device may calculate at least one of $t_{PSDelay}$, $t_{ALSDelay}$, or $t_{ALSPeriod}$ based on the scan rate of the display. According to an embodiment, $t_{PSDelay}$, $t_{ALSDelay}$ or $t_{ALSPeriod}$ may be calculated based on Equations (1) to (3).

According to an embodiment, at least one of $t_{PSDelay}$, $t_{ALSDelay}$, or $t_{ALSPeriod}$ may be calculated by the processor or the optical sensor of the electronic device.

According to an embodiment, the electronic device may operate the optical sensor in operation 808. For example, when the optical sensor is a proximity sensor, the light emitting unit of the optical sensor may be controlled based on $t_{PSDelay}$ calculated in operation 807. For example, the electronic device may input the calculated $t_{PSDelay}$ to a register of the proximity sensor, and the proximity sensor may operate the light emitting unit, $t_{PSDelay}$ after detecting Vsync of the display. According to an embodiment, operation of the proximity sensor is described below with reference to FIGS. 10 to 18.

According to an embodiment, when the optical sensor is an illuminance sensor, the light receiving unit of the optical sensor may be controlled based on at least one of $t_{ALSDelay}$ or $t_{ALSPeriod}$ calculated in operation 807. For example, the electronic device may input at least one of the calculated $t_{ALSDelay}$ or $t_{ALSPeriod}$ to a register of the illuminance sensor, and the illuminance sensor may operate the light receiving unit at a period of $t_{ALSPeriod}$, $t_{ALSDelay}$ after detecting Vsync of the display. According to an embodiment, operation of the illuminance sensor is described below with reference to FIGS. 19 to 22.

FIG. 9 is a view illustrating a scan rate change and extension/contraction operation of a flexible display of an electronic device according to an embodiment.

Referring to FIG. 9, an electronic device (e.g., the electronic device 101 of FIG. 1) may include a flexible display (e.g., the display module 160 of FIG. 1) in which the size of an exposed area is varied.

According to an embodiment, an exposed area 910 when the flexible display is in a contracted state may include A scan lines, and B pixels may be disposed in each scan line. For example, a display scan rate when the flexible display is in the contracted state may be 60Hz.

According to an embodiment, an optical sensor 920 (e.g., the sensor module 176 of FIG. 1) may be disposed on a rear surface of an upper area of the exposed area 910 when the flexible display is in the contracted state. For example, when an order of a plurality of scanning lines starts from an upper end of the exposed area, the scanning lines affecting the optical sensor 920 may be the scanning lines in a front order.

According to an embodiment, when the flexible display extends in the upper direction while the optical sensor 920 is fixed, the exposed area 911 in the state extended in the upper direction may include an increased number of scan lines, and B pixels may be disposed in each scan line. For example, the increased number of scan lines may be 1.5A. According to an embodiment, the scan rate of the display may be maintained at the scan rate of the contracted state or may be changed to N Hz.

According to an embodiment, in the state in which the flexible display is extended in the upper direction, the order of scan lines starts from the in the upper direction extended portion. Therefore, the scanning lines affecting the optical sensor 920 may be later than an order of the scanning lines affecting the optical sensor 920 when the flexible display is in the contracted state.

According to an embodiment, adjustment of operation timing of the optical sensor in the state in which the flexible display is extended in the upper direction is described below in more detail with reference to FIGS. 10 to 13, 17, 19, and 21.

According to an embodiment, when the flexible display extends in the lower direction while the optical sensor 920 is fixed, the exposed area 912 in the state extended in the lower direction may include an increased number of scan lines, and B pixels may be disposed in each scan line. For example, the increased number of scan lines may be 1.5A. According to an embodiment, the scan rate of the display may be maintained at the scan rate of the contracted state or may be changed to N Hz.

According to an embodiment, in the state in which the flexible display is extended in the lower direction, the scan lines affecting the optical sensor 920 are the same as the scan lines affecting the optical sensor 920 in the contracted state of the flexible display.

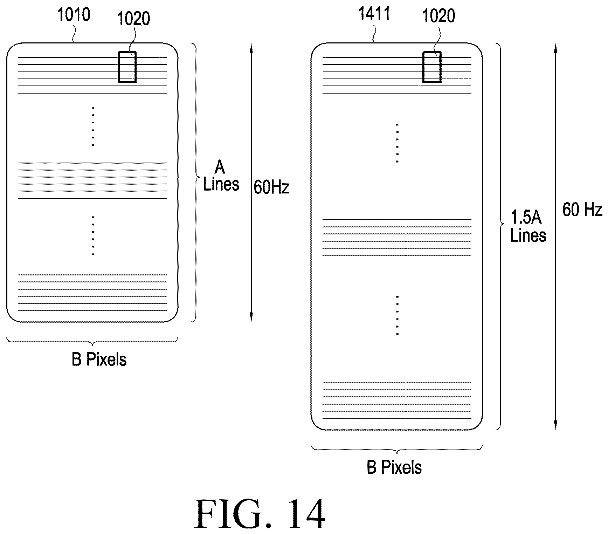

According to an embodiment, adjustment of operation timing of the optical sensor in the state in which the flexible display is extended in the upper direction is described below in more detail with reference to FIGS. 14 to 16, 18, 20, and 22.

FIG. 10 is a view illustrating an extension/contraction operation of an upper end without a scan rate change of a flexible display of an electronic device according to an embodiment.

Referring to FIG. 10, an exposed area 1010 when a flexible display (e.g., the display module 160 of FIG. 1) is in a contracted state may include A scan lines, and B pixels may be disposed in each scan line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, when an order of a plurality of scanning lines starts from an upper end of the exposed area, the scanning lines affecting the optical sensor 1020 may be the scanning lines in a front order. For example, the optical sensor 1020 may be a proximity sensor including a light emitting unit.

According to an embodiment, operation timing of the optical sensor 1020 in the contracted state of the flexible display is described below with reference to FIGS. 11A and 11B.

According to an embodiment, when the flexible display extends in the upper direction while the optical sensor 1020 is fixed, the exposed area 1011 in the state extended in the upper direction may include an increased number of scan lines, and B pixels may be disposed in each scan line. For example, the increased number of scan lines may be 1.5A.

According to an embodiment, the scan rate of the display may be maintained at 60Hz.

According to an embodiment, in the state in which the flexible display is extended in the upper direction, the order of scan lines starts from the in the upper direction extended portion. Therefore, the scanning lines affecting the optical sensor 1020 may be later than an order of the scanning lines affecting the optical sensor 1020 when the flexible display is in the contracted state.

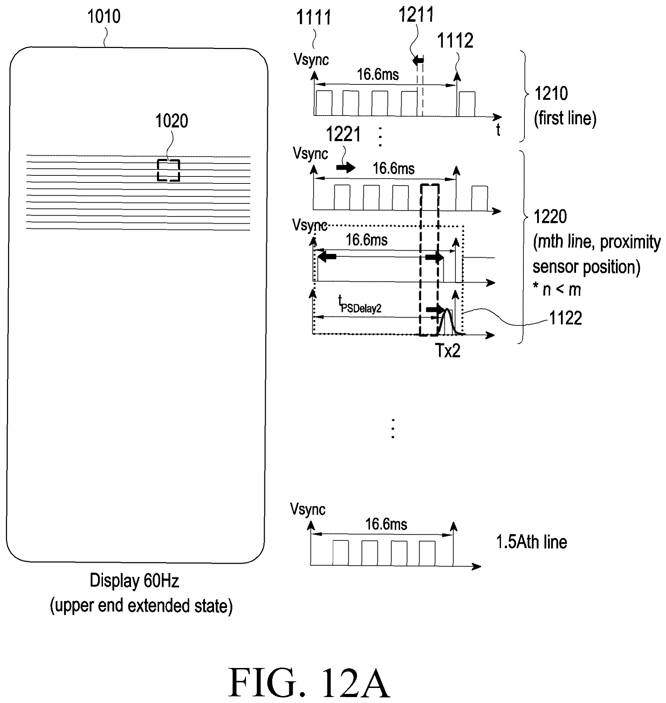

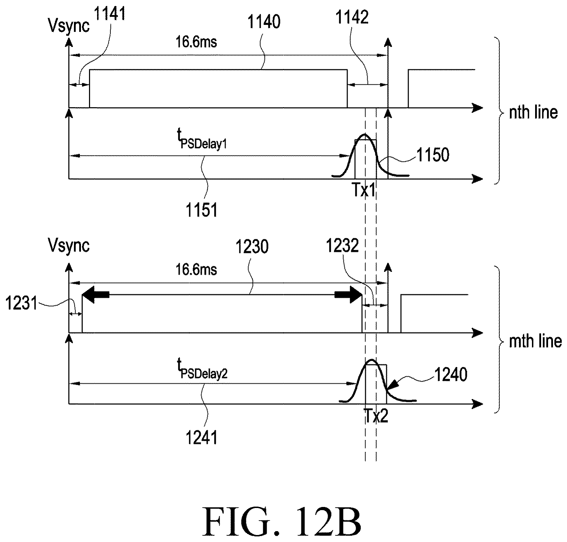

According to an embodiment, the operation in which operation timing of the optical sensor 1020 is adjusted in the state in which the flexible display is extended in the upper direction is described below with reference to FIGS. 12A and 12B.

FIG. 11A is a view illustrating an operation of a proximity sensor when a flexible display of an electronic device is in a contracted state according to an embodiment.

Referring to FIG. 11A, an exposed area 1010 when a flexible display (e.g., the display module 160 of FIG. 1) is in a contracted state may include A scan lines, and B pixels may be disposed in each scan line. For example, a display scan rate when the flexible display is in the contracted state may be 60Hz.

According to an embodiment, the flexible display may turn on/off display pixels included in each scan line by control of a display driver IC (e.g., the display driver IC 641 of FIG. 6B). According to an embodiment, display pixels disposed in the same scan line may be turned on/off simultaneously.

According to an embodiment, the flexible display may turn on/off display pixels sequentially from a first scan line 1110 disposed at the upper end of the exposed area 1010. According to an embodiment, the flexible display may periodically apply Vsync signals 1111, 1112 for synchronizing times of a plurality of scan lines to each scan line to control on/off timing of each scan line. According to an embodiment, a period of the Vsync signals 1111, 1112 may be the reciprocal of the scan rate. For example, when the scan rate is 60Hz, the period of the Vsync signals 1111, 1112 may be about 16.6 ms.

According to an embodiment, a plurality of display pixels included in the flexible display may be 4 duty that blinks four times in one period of the Vsync signals 1111, 1112.

According to an embodiment, even when the number of scan lines or scan rate of the flexible display is changed, the AMOLED on ratio (AOR) of duty intervals may be maintained. According to an embodiment, AOR is related to display brightness and may be a ratio of on interval to off interval in a period when a display pixel is turned on/off once.

According to an embodiment, when the display scan rate is not a multiple, the duty may be changed (e.g., 3 duty or 5 duty).

According to an embodiment, an optical sensor 1020 (e.g., the sensor module 176 of FIG. 1) may be disposed on a rear surface of an upper area of the exposed area 1010 when the flexible display is in the contracted state. For example, the optical sensor 1020 may be a proximity sensor including a light emitting unit.

According to an embodiment, display pixels included in a scan line 1120 in an area where the optical sensor 1020 is disposed may be turned on/off later than the on/off timing of display pixels included in the first scan line 1110.

According to an embodiment, the optical sensor 1020 may operate in an interval when none of the display pixels included in the first scan line to the display pixels included in the Ath scan line are turned on/off within one period of the Vsync signals 1111, 1112. According to an embodiment, the optical sensor 1020 may perform light emitting unit operation (Tx1) at a time when $t_{PSDelayl}$ has passed after the first Vsync signal 1111 is detected.

According to an embodiment, operation 1122 of the light emitting unit of the optical sensor 1020, $t_{PSDelay}$, may be performed in an interval when a display signal is not applied to scan lines included in the exposed area among intervals between the first Vsync signal 1111 and the second Vsync signal 1112. According to an embodiment, operation 1122 of the light emitting unit of the optical sensor 1020 is described more specifically with reference to FIG. 11B.

FIG. 11B is a view illustrating an operation timing of the proximity sensor of FIG. 11A.

Referring to FIG. 11B, a first Vsync signal 1111 and a second Vsync signal 1112 that is the next Vsync signal of the first Vsync signal 1111 may be generated based on a period of the Vsync signal.

According to an embodiment, the proximity sensor may perform a sensing operation 1150 of the proximity sensor in intervals 1141, 1142 except for a display interval 1140 when all display pixels from the first scan line to the last Ath scan line of the exposed area are turned on/off among intervals between the first Vsync signal 1111 and the second Vsync signal 1112.

According to an embodiment, intervals between the first Vsync signal 1111 and the second Vsync signal 1112 may include a first blank interval 1141 that is an interval between the first Vsync signal 1111 and a time when the display interval 1140 starts, and a second blank interval 1142 that is an interval between a time when the display interval 1140 ends and the second Vsync signal 1112. According to an embodiment, the first blank interval 1141 may be a back porch interval after the Vsync signal. According to an embodiment, the second blank interval 1142 may be a front porch interval before the Vsync signal.

According to an embodiment, the proximity sensor may operate 1150 the light emitting unit in the second blank interval 1142 when a charge amount 1130 of a thin-film-transistor (TFT) is low out of the first blank interval 1141 and the second blank interval 1142. According to an embodiment, the proximity sensor may operate 1150 the light emitting unit , tPSDelayl 1151 after the first Vsync signal 1111 is detected.

According to an embodiment, in the sensing operation 1150 of the proximity sensor, a signal applied to the sensor is a square wave pulse, but in practice, charging and discharging of the charge amount 1130 of the TFT takes time and is affected by on/off of the light emitting unit, so it is advantageous to be disposed in the middle portion of the second blank interval 1142, and may actually be in a curved form.

As such, since the back porch interval after Vsync has a high charge amount in the TFT and a large photoelectric effect, the photoelectric effect may be decreased by performing the sensing operation of the proximity sensor in the front porch interval before Vsync.

FIG. 12A is a view illustrating an operation of a proximity sensor when an upper end of a flexible display of an electronic device is extended without a scan rate change according to an embodiment.

Referring to FIG. 12A, an exposed area 1011 when a flexible display (e.g., the display module 160 of FIG. 1) is in an extended state may include 1.5A scan lines, and B pixels may be disposed in each scan line. For example, the display scan rate in the contracted state of the flexible display may be 60Hz the same as illustrated in FIG. 11A.

According to an embodiment, the flexible display may turn on/off display pixels sequentially from a first scan line 1210 disposed at the upper end of the exposed area 1011. According to an embodiment, the flexible display may periodically apply Vsync signals 1111, 1112 for synchronizing times of a plurality of scan lines to each scan line to control on/off timing of each scan line. According to an embodiment, as illustrated in FIG. 11A, since the scan rate is the same at 60Hz, a period of the Vsync signals 1111, 1112 may be about 16.6 ms.

According to an embodiment, as the number of scan lines that should be operated within the same period increases, 4 duty pulse width modulation (PWM) 1211 may be pulled forward.

According to an embodiment, on/off timing 1221 of display pixels included in an mth scan line affecting the optical sensor 1020 may be turned on/off later than the on/off timing of display pixels included in an nth scan line affecting the optical sensor 1020 in the contracted state of the flexible display. According to an embodiment, m may be larger than n. For example, the optical sensor 1020 may be a proximity sensor including a light emitting unit.

According to an embodiment, the optical sensor 1020 may operate in an interval when none of the display pixels included in the first scan line to the display pixels included in the 1.5Ath scan line are turned on/off within one period of the Vsync signals 1111, 1112.

According to an embodiment, as the scanning lines included in the exposed area are increased from A to 1.5A, a display interval when display pixels included in the 1.5A scanning lines are turned on/off may be increased. Accordingly, an interval when a display signal is not applied to scan lines included in the exposed area among intervals between the first Vsync signal 1111 and the second Vsync signal 1112 may decrease.

Although FIG. 12A illustrates the same scan rate as FIG. 11A, according to an embodiment, as the scan rate increases, the interval when a display signal is not applied to scan lines may decrease inversely proportional to the scan rate change ratio.

According to an embodiment, the optical sensor 1020 may perform light emitting unit operation Tx2 at a time when $t_{PSDelay2}$ has passed after the first Vsync signal 1111 is detected.

According to an embodiment, operation 1222 of the light emitting unit of the optical sensor 1020, $t_{PSDelay2}$, may be performed in an interval when a display signal is not applied to scan lines included in the exposed area among intervals between the first Vsync signal 1111 and the second Vsync signal 1112. According to an embodiment, operation 1222 of the light emitting unit of the optical sensor 1020 is described more specifically with reference to FIG. 12B.

FIG. 12B is a view illustrating an operation timing of the proximity sensor of FIG. 12A.

Referring to FIG. 12B, in the contracted state of the flexible display as illustrated in FIG. 11B, a proximity sensor positioned at an nth scan line of the flexible display may operate 1150 the light emitting unit in a second blank interval 1142 (e.g., front porch) when the charge amount of a thin-film-transistor (TFT) is low among intervals 1141, 1142 except for a display interval 1140 when all display pixels from the first scan line to the last $A_{th}$ scan line of the exposed area are turned on/off among intervals between the first Vsync signal and the second Vsync signal. According to an embodiment, the proximity sensor may operate the light emitting unit 1150, tPSDelay1 1151 after the first Vsync signal is detected.

According to an embodiment, when the flexible display is in an extended state, a proximity sensor positioned at an $m(m>n)_{th}$ scan line of the flexible display may identify intervals 1231, 1232 except for a display interval 1230 when all display pixels from the first scan line to the last $1.5A_{th}$ scan line of the exposed area are turned on/off among intervals between the first Vsync signal and the second Vsync signal.

According to an embodiment, the display interval 1230 when the flexible display is in an extended state may be increased compared to the display interval 1140 in the contracted state of the flexible display. According to an embodiment, intervals 1231, 1232 except for the display interval 1230 when the flexible display is in an extended state may be decreased compared to intervals 1141, 1142 except for the display interval 1140 in the contracted state of the flexible display.

According to an embodiment, the proximity sensor may operate 1240 the light emitting unit in a second blank interval 1232 (e.g., front porch) that is an interval immediately before the Vsync signal among intervals 1231, 1232 except for the display interval 1230. According to an embodiment, the proximity sensor may operate 1240 the light emitting unit, tPSDelay2 1241 after the first Vsync signal is detected. According to an embodiment, tPSDelay2 1241 may be larger than tPSDelay1 1151.

As such, when the number of scan lines of the exposed area increases based on extension of the flexible display in the upper direction, light emission timing of the proximity sensor is delayed, and thereby the photoelectric effect may be minimized.

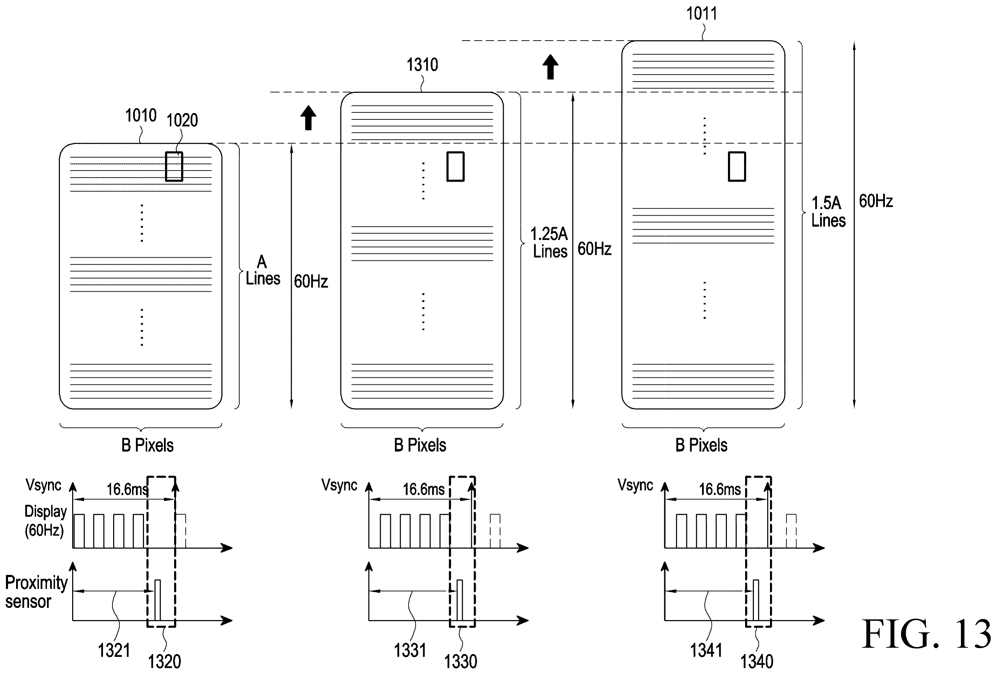

FIG. 13 is a view illustrating an operation of a proximity sensor according to an extension/contraction operation of an upper end without a scan rate change of a flexible display of an electronic device according to an embodiment. For example, FIG. 13 illustrates a process in which light emission timing of a proximity sensor is changed in real-time while a flexible display increases in an in the upper direction.

Referring to FIG. 13, an exposed area 1010 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, when an order of a plurality of scanning lines starts from an upper end of the exposed area, the scanning lines affecting the optical sensor 1020 may be the scanning lines in a front order. For example, the optical sensor 1020 may be a proximity sensor including a light emitting unit.

According to an embodiment, when the flexible display is in the contracted state, the proximity sensor may operate the light emitting unit 1320 in an interval except for a display interval when all display pixels included in the scanning lines of the exposed area are turned on/off among intervals between a Vsync signal and a next Vsync signal. According to an embodiment, when the flexible display is in the contracted state, the proximity sensor may operate the light emitting unit 1320, a first delay 1321 after the Vsync signal is detected.

According to an embodiment, when the flexible display is partially extended in the upper direction while the optical sensor 1020 is fixed, an exposed area 1310 in the state partially extended in the upper direction includes an increased number of scanning lines, and B pixels may be disposed in each scanning line. For example, the increased number of scan lines may be 1.25A. According to an embodiment, the scan rate of the display may be maintained at 60Hz.

According to an embodiment, when the flexible display is partially extended in the upper direction, an order of the scanning lines starts from the portion extended in the upper direction. Therefore, the scanning lines affecting the optical sensor 1020 may be later than an order of the scanning lines affecting the optical sensor 1020 when the flexible display is in the contracted state.

According to an embodiment, when the flexible display is in the partially extended state, the proximity sensor may operate the light emitting unit 1330 in an interval except for a display interval when all display pixels included in the scanning lines of the exposed area are turned on/off among intervals between a Vsync signal and a next Vsync signal. According to an embodiment, as the exposed area of the flexible display is partially extended, the number of scanning lines is increased to 1.25A, and an interval except for the display interval when all display pixels included in the scanning lines are turned on/off may be decreased compared to when the flexible display is in the contracted state.

According to an embodiment, when the flexible display is in the partially extended state where the number of scanning lines included in the exposed area is 1.25A, the proximity sensor may operate the light emitting unit 1330, a second delay 1331 after the Vsync signal is detected. According to an embodiment, the second delay 1331 may be longer than the first delay 1321.

According to an embodiment, when the flexible display is maximally extended in the upper direction while the optical sensor 1020 is fixed, an exposed area 1011 in the state maximally extended in the upper direction includes an increased number of scanning lines, and B pixels may be disposed in each scanning line. For example, the increased number of scan lines may be 1.5A. According to an embodiment, the scan rate of the display may be maintained at 60Hz.

According to an embodiment, the scanning lines affecting the optical sensor 1020 may be later than an order of the scanning lines affecting the optical sensor 1020 when the number of scanning lines included in the exposed area of the flexible display is 1.25A in the extended state.

According to an embodiment, when the flexible display is in the maximally extended state, the proximity sensor may operate the light emitting unit 1340 in an interval except for a display interval when all display pixels included in the scanning lines of the exposed area are turned on/off among intervals between a Vsync signal and a next Vsync signal. According to an embodiment, as the exposed area of the flexible display is maximally extended, the number of scanning lines is increased to 1.5A, and an interval except for the display interval when all display pixels included in the scanning lines are turned on/off may be decreased compared to when the number of scanning lines included in the exposed area of the flexible display is 1.25A in the partially extended state.

According to an embodiment, when the flexible display is in the maximally extended state where the number of scanning lines included in the flexible display is 1.5A, the proximity sensor may operate the light emitting unit 1340, a third delay 1341 after the Vsync signal is detected. According to an embodiment, the third delay 1341 may be longer than the second delay 1331.

As such, when a position of the proximity sensor is fixed and the exposed area of the flexible display is increased while the scan rate is maintained, operation timing of the proximity sensor is adjusted according to the number of activated scanning lines, thereby reducing a photoelectric effect.

FIG. 14 is a view illustrating an extension/contraction operation of a lower end without a scan rate change of a flexible display of an electronic device according to an embodiment.

Referring to FIG. 14, an exposed area 1010 in a state in which the flexible display (e.g., the display module 160 of FIG. 1) is contracted includes A scanning lines, and B pixels may be disposed in each scanning line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, when an order of a plurality of scanning lines starts from an upper end of the exposed area, the scanning lines affecting the optical sensor 1020 may be the scanning lines in a front order. For example, the optical sensor 1020 may be a proximity sensor including a light emitting unit.

According to an embodiment, when the flexible display extends in the lower direction while the optical sensor 1020 is fixed, the exposed area 1411 in the state extended in the lower direction may include an increased number of scan lines, and B pixels may be disposed in each scan line. For example, the increased number of scan lines may be 1.5A. According to an embodiment, the scan rate of the display may be maintained at 60Hz.

According to an embodiment, in the state in which the flexible display is extended in the lower direction, the scanning lines affecting the optical sensor 1020 may be the same as the scanning lines affecting the optical sensor 1020 when the flexible display is in the contracted state.

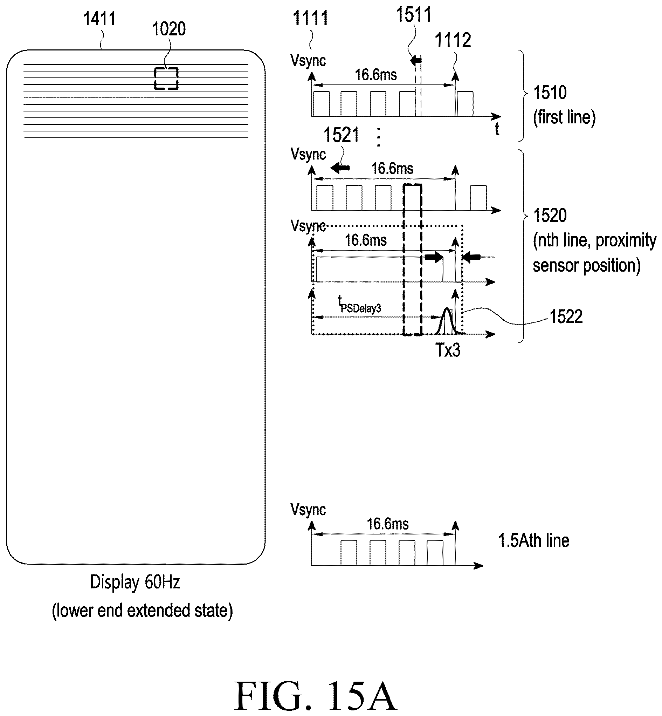

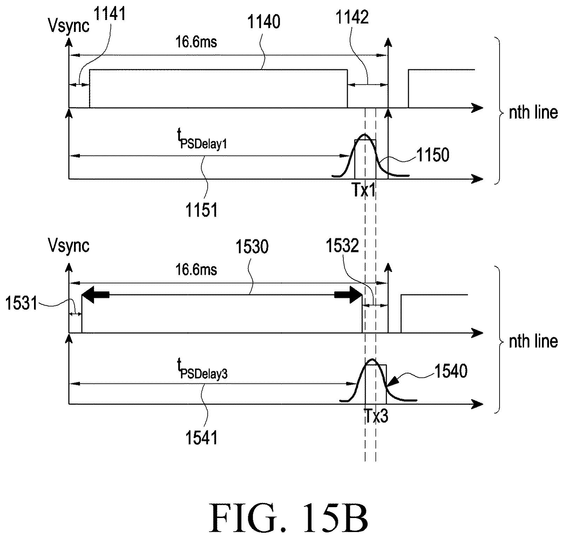

According to an embodiment, an operation in which operation timing of the optical sensor 1020 is adjusted in the state in which the flexible display is extended in the lower direction is described below with reference to FIGS. 15A and 15B.

FIG. 15A is a view illustrating an operation of a proximity sensor when a lower end of a flexible display of an electronic device is extended without a scan rate change according to an embodiment.

Referring to FIG. 15A, an exposed area 1411 in a state in which the flexible display (e.g., the display module 160 of FIG. 1) is extended includes 1.5A scanning lines, and B pixels may be disposed in each scanning line. For example, a display scan rate when the flexible display is in the extended state may be 60Hz, the same as illustrated in FIG. 11A.

According to an embodiment, the flexible display may turn on/off display pixels sequentially from a first scan line 1510 disposed at the upper end of the exposed area 1411. According to an embodiment, the flexible display may periodically apply Vsync signals 1111, 1112 for synchronizing times of a plurality of scan lines to each scan line to control on/off timing of each scan line. According to an embodiment, as illustrated in FIG. 11A, since the scan rate is the same at 60Hz, a period of the Vsync signals 1111, 1112 may be about 16.6 ms.

According to an embodiment, as the number of scan lines that should be operated within the same period increases, 4 duty pulse width modulation (PWM) 1511 may be pulled forward. According to an embodiment, an on/off timing 1521 of display pixels included in an nth scanning line affecting the optical sensor 1020 may be turned on/off earlier than an on/off timing of display pixels included in the nth scanning line affecting the optical sensor 1020 when the flexible display is in the contracted state.

According to an embodiment, the optical sensor 1020 may operate in an interval when none of the display pixels included in the first scan line to the display pixels included in the 1.5Ath scan line are turned on/off within one period of the Vsync signals 1111, 1112. For example, the optical sensor 1020 may be a proximity sensor including a light emitting unit.

According to an embodiment, as the scanning lines included in the exposed area are increased from A to 1.5A, a display interval when display pixels included in the 1.5A scanning lines are turned on/off may be increased. Accordingly, an interval when a display signal is not applied to scan lines included in the exposed area among intervals between the first Vsync signal 1111 and the second Vsync signal 1112 may decrease.

Although FIG. 15A illustrates the same scan rate as FIG. 11A, according to an embodiment, as the scan rate increases, an interval when a display signal is not applied to the scanning lines may be decreased in inverse proportion to a change ratio of the scan rate.

According to an embodiment, the optical sensor 1020 may perform light emitting unit operation Tx3 at a time when $t_{PSDelay3}$ has passed after the first Vsync signal 1111 is detected.

According to an embodiment, operation 1522 of the light emitting unit of the optical sensor 1020, $t_{PSDelay3}$, may be performed in an interval when a display signal is not applied to scan lines included in the exposed area among intervals between the first Vsync signal 1111 and the second Vsync signal 1112. According to an embodiment, the operation 1522 of the light emitting unit of the optical sensor 1020 is described in more detail with reference to FIG. 15B.

FIG. 15B is a view illustrating an operation timing of the proximity sensor of FIG. 15A.

Referring to FIG. 15B, in the contracted state of the flexible display as illustrated in FIG. 11B, a proximity sensor positioned at an nth scanning line of the flexible display may operate the light emitting unit 1150 in a second blank interval 1142 (e.g., front porch) when a charge amount of a thin-film-transistor (TFT) is low among intervals 1141, 1142 except for a display interval 1140 in which all display pixels from the first scanning line to the last $A_{th}$ scanning line of the exposed area are turned on/off among intervals between the first Vsync signal and the second Vsync signal. According to an embodiment, the proximity sensor may operate the light emitting unit 1150, tPSDelay1 1151 after the first Vsync signal is detected.

According to an embodiment, when the flexible display is in the extended state, the proximity sensor positioned at the nth scanning line of the flexible display may identify intervals 1531, 1532 except for a display interval 1530 in which all display pixels from the first scanning line to the last $1.5A_{th}$ scanning line of the exposed area are turned on/off among intervals between the first Vsync signal and the second Vsync signal, the same as when the flexible display is in the contracted state.

According to an embodiment, the intervals 1531, 1532 except for the display interval 1530 in which all display pixels of the flexible display extended in the lower direction are turned on/off may be substantially the same as intervals (e.g., intervals 1231, 1232 of FIG. 12B) except for the display interval (e.g., interval 1230 of FIG. 12B) in which all displays of the flexible display extended in the upper direction illustrated in FIG. 12B are turned on/off.

According to an embodiment, the proximity sensor may operate 1540 the light emitting unit in a second blank interval 1532 (e.g., front porch) that is an interval immediately before the Vsync signal among intervals 1531, 1532 except for the display interval 1530. According to an embodiment, the proximity sensor may operate the light emitting unit 1540, tPSDelay3 1541 after the first Vsync signal is detected. According to an embodiment, tPSDelay3 1541 may be larger than tPSDelay1 1151 and substantially the same as tPSDelay2 (e.g., 1241 of FIG. 12B).

As such, when the number of scanning lines in the exposed area increases based on the flexible display extending in the lower direction, light emission timing of the proximity sensor is delayed, thereby minimizing a photoelectric effect.

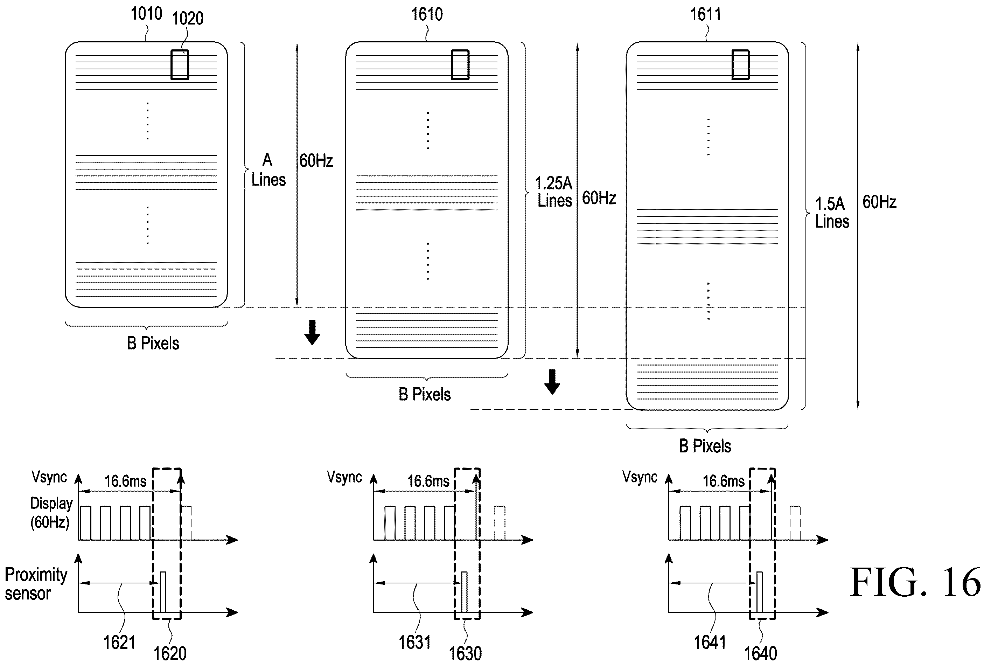

FIG. 16 is a view illustrating an operation of a proximity sensor according to an extension/contraction operation of a lower end without a scan rate change of a flexible display of an electronic device according to an embodiment. For example, FIG. 16 illustrates a process in which light emission timing of a proximity sensor is changed in real-time while the flexible display increases in the lower direction.

Referring to FIG. 16, an exposed area 1010 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, when an order of a plurality of scanning lines starts from an upper end of the exposed area, the scanning lines affecting the optical sensor 1020 may be the scanning lines in a front order. For example, the optical sensor 1020 may be a proximity sensor including a light emitting unit.

According to an embodiment, when the flexible display is in the contracted state, the proximity sensor may operate the light emitting unit 1620 in an interval except for a display interval when all display pixels included in the scanning lines of the exposed area are turned on/off among intervals between a Vsync signal and a next Vsync signal. According to an embodiment, when the flexible display is in the contracted state, the proximity sensor may operate the light emitting unit 1620, a first delay 1621 after the Vsync signal is detected.

According to an embodiment, when the flexible display is partially extended in the lower direction while the optical sensor 1020 is fixed, an exposed area 1610 in the state partially extended in the lower direction includes an increased number of scanning lines, and B pixels may be disposed in each scanning line. For example, the increased number of scan lines may be 1.25A. According to an embodiment, the scan rate of the display may be maintained at 60Hz.

According to an embodiment, when the flexible display is partially extended in the lower direction, the scanning lines affecting the optical sensor 1020 may be the same as the scanning lines affecting the optical sensor 1020 when the flexible display is in the contracted state.

According to an embodiment, when the flexible display is in the partially extended state, the proximity sensor may operate the light emitting unit 1630 in an interval except for a display interval when all display pixels included in the scanning lines of the exposed area are turned on/off among intervals between a Vsync signal and a next Vsync signal. According to an embodiment, as the exposed area of the flexible display is partially extended, the number of scanning lines is increased to 1.25A, and an interval except for the display interval when all display pixels included in the scanning lines are turned on/off may be decreased compared to when the flexible display is in the contracted state.

According to an embodiment, when the flexible display is in the partially extended state where the number of scanning lines included in the exposed area is 1.25A, the proximity sensor may operate the light emitting unit 1630, a second delay 1631 after the Vsync signal is detected. According to an embodiment, the second delay 1631 may be longer than the first delay 1621.

According to an embodiment, when the flexible display is maximally extended in the lower direction while the optical sensor 1020 is fixed, an exposed area 1411 in the state maximally extended in the lower direction includes an increased number of scanning lines, and B pixels may be disposed in each scanning line. For example, the increased number of scan lines may be 1.5A. According to an embodiment, the scan rate of the display may be maintained at 60Hz.

According to an embodiment, the scanning lines affecting the optical sensor 1020 may be the same as the scanning lines affecting the optical sensor 1020 when the flexible display is in the contracted state and/or partially extended state.

According to an embodiment, when the flexible display is in the maximally extended state, the proximity sensor may operate the light emitting unit 1640 in an interval except for a display interval when all display pixels included in the scanning lines of the exposed area are turned on/off among intervals between a Vsync signal and a next Vsync signal. According to an embodiment, as the exposed area of the flexible display is maximally extended, the number of scanning lines is increased to 1.5A, and an interval except for the display interval when all display pixels included in the scanning lines are turned on/off may be decreased compared to when the number of scanning lines included in the exposed area of the flexible display is 1.25A in the extended state.

According to an embodiment, when the flexible display is in the maximally extended state where the number of scanning lines included in the flexible display is 1.5A, the proximity sensor may operate the light emitting unit 1640, a third delay 1641 after the Vsync signal is detected. According to an embodiment, the third delay 1641 may be longer than the second delay 1631.

According to an embodiment, when a size of the exposed area of the flexible display increases without a scan rate change, operation timing of the proximity sensor may be included in an interval other than an entire interval when display pixels included in each scanning line are turned on/off while the Vsync period is maintained. According to an embodiment, when there is no change in the scan rate, since the entire interval when display pixels are turned on/off is related to the number of scanning lines included in the exposed area, operation timing of the proximity sensor may be substantially the same when the extension direction of the flexible display is in the upper direction and when it is in the lower direction.

As such, when a position of the proximity sensor is fixed and the exposed area of the flexible display is increased while the scan rate is maintained, operation timing of the proximity sensor is adjusted according to the number of activated scanning lines, thereby reducing a photoelectric effect.

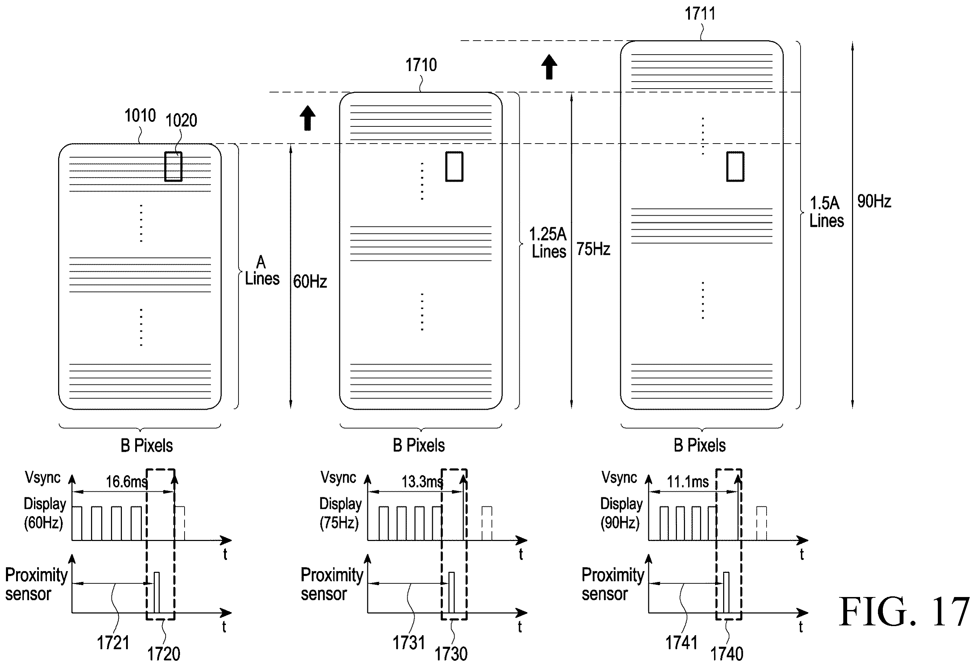

FIG. 17 is a view illustrating an operation of a proximity sensor according to a scan rate change and an extension/contraction operation of an upper end of a flexible display of an electronic device according to an embodiment. For example, FIG. 17 illustrates a process in which light emission timing of a proximity sensor is changed in real-time while the flexible display increases in the upper direction with the scan rate of the flexible display being changed.

Referring to FIG. 17, an exposed area 1010 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, the optical sensor 1020 may be a proximity sensor including a light emitting unit.

According to an embodiment, when the flexible display is in the contracted state, the proximity sensor may operate the light emitting unit 1720 in an interval except for a display interval when all display pixels included in the scanning lines of the exposed area are turned on/off among intervals between a Vsync signal and a next Vsync signal. According to an embodiment, when the flexible display is in the contracted state, a period of the Vsync signal is about 16.6ms, which is the reciprocal of the scan rate, and the proximity sensor may operate the light emitting unit 1720, a first delay 1721 after the Vsync signal is detected.

According to an embodiment, when the flexible display is partially extended in the upper direction while the optical sensor 1020 is fixed, an exposed area 1710 in the state partially extended in the upper direction includes an increased number of scanning lines, and B pixels may be disposed in each scanning line. For example, the increased number of scan lines may be 1.25A. According to an embodiment, the scan rate of the display may be changed to 75Hz.

According to an embodiment, as the display scan rate is changed to 75Hz, a period of the Vsync signal may also be changed to about 13.3ms, which is the reciprocal of the scan rate.

According to an embodiment, when the flexible display is in the partially extended state, the proximity sensor may operate the light emitting unit 1730 in an interval except for a display interval when all display pixels included in the scanning lines of the exposed area are turned on/off among intervals between a Vsync signal and a next Vsync signal, which has a length of about 13.3ms. According to an embodiment, when the display scan rate of the flexible display is increased, a length of an interval except for the display interval when all display pixels included in the scanning lines are turned on/off may be decreased.

According to an embodiment, when the flexible display is in the partially extended state where the scan rate is changed to 75Hz, the proximity sensor may operate the light emitting unit 1730, a second delay 1731 after the Vsync signal is detected. According to an embodiment, the second delay 1731 may be shorter than the first delay 1721. For example, the second delay 1731 may be about 60/75 times the first delay 1721.

According to an embodiment, when the scan rate is changed, the proximity sensor may ignore a change in the number of scanning lines. According to an embodiment, the proximity sensor may operate the light emitting unit 1730 further considering that the number of scanning lines increases. For example, since a delay increases when the number of scanning lines is 1.25A compared to when it is A, when the change in the number of scanning lines is further considered, the second delay 1731 may be larger than about 60/75 times the first delay 1721.

According to an embodiment, when the flexible display is maximally extended in the upper direction while the optical sensor 1020 is fixed, the exposed area 1711 in the state extended in the upper direction includes an increased number of scanning lines, and B pixels may be disposed in each scanning line. For example, the increased number of scan lines may be 1.5A. According to an embodiment, the scan rate of the display may be changed to 90Hz. According to an embodiment, as the display scan rate is changed to 90Hz, a period of the Vsync signal may also be changed to about 11.1ms, which is the reciprocal of the scan rate.

According to an embodiment, when the flexible display is in the maximally extended state, the proximity sensor may operate the light emitting unit 1740 in an interval except for a display interval when all display pixels included in the scanning lines of the exposed area are turned on/off among intervals between a Vsync signal and a next Vsync signal, which has a length of about 11.1ms.

According to an embodiment, when the flexible display is in the partially extended state where the scan rate is changed to 90Hz, the proximity sensor may operate the light emitting unit 1740, a second delay 1741 after the Vsync signal is detected. According to an embodiment, the third delay 1741 may be shorter than the first delay 1721 and the second delay 1731. For example, the third delay 1741 may be about 60/90 times the first delay 1721.

According to an embodiment, when the scan rate is changed, the proximity sensor may ignore a change in the number of scanning lines. According to an embodiment, the proximity sensor may operate the light emitting unit 1740 further considering that the number of scanning lines increases. For example, since a delay increases when the number of scanning lines is 1.5A compared to when it is A, when the change in the number of scanning lines is further considered, the third delay 1741 may be larger than about 60/90 times the first delay 1721.

As such, when a position of the proximity sensor is fixed and the exposed area of the flexible display is increased while the scan rate is changed, operation timing of the proximity sensor is adjusted according to the scan rate and/or the number of activated scanning lines, thereby reducing a photoelectric effect.

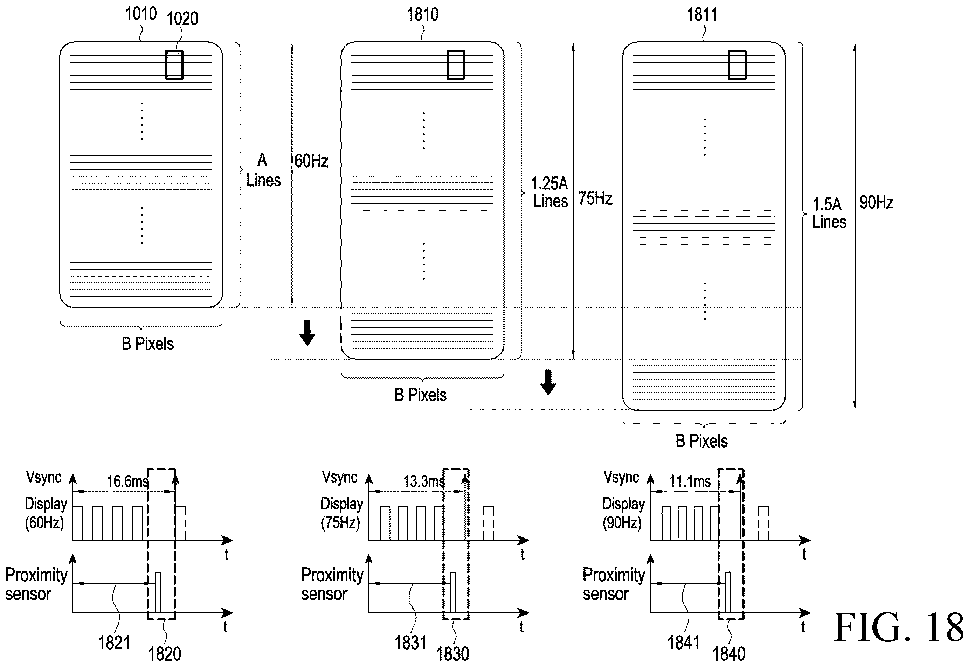

FIG. 18 is a view illustrating an operation of a proximity sensor according to a scan rate change and an extension/contraction operation of a lower end of a flexible display of an electronic device according to an embodiment. For example, FIG. 18 illustrates a process in which light emission timing of a proximity sensor is changed in real-time while the flexible display increases in the lower direction with the scan rate of the flexible display being changed.

Referring to FIG. 18, an exposed area 1010 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an optical sensor 1020 (e.g., the sensor module 176 of FIG. 1) may be disposed on a rear surface of an upper area of the exposed area 1010 when the flexible display is in the contracted state. For example, the optical sensor 1020 may be a proximity sensor including a light emitting unit.

According to an embodiment, when the flexible display is in the contracted state, the proximity sensor may operate the light emitting unit 1820 in an interval except for a display interval when all display pixels included in the scanning lines of the exposed area are turned on/off among intervals between a Vsync signal and a next Vsync signal. According to an embodiment, when the flexible display is in the contracted state, a period of the Vsync signal is about 16.6ms, which is the reciprocal of the scan rate, and the proximity sensor may operate the light emitting unit 1820, a first delay 1821 after the Vsync signal is detected.

According to an embodiment, when the flexible display is partially extended in the lower direction while the optical sensor 1020 is fixed, an exposed area 1810 in the state partially extended in the lower direction includes an increased number of scanning lines, and B pixels may be disposed in each scanning line. For example, the increased number of scan lines may be 1.25A. According to an embodiment, the scan rate of the display may be changed to 75Hz.

According to an embodiment, as the display scan rate is changed to 75Hz, a period of the Vsync signal may also be changed to about 13.3ms, which is the reciprocal of the scan rate.

According to an embodiment, when the flexible display is in the partially extended state, the proximity sensor may operate the light emitting unit 1830 in an interval except for a display interval when all display pixels included in the scanning lines of the exposed area are turned on/off among intervals between a Vsync signal and a next Vsync signal, which has a length of about 13.3ms. According to an embodiment, when the display scan rate of the flexible display is increased, a length of an interval except for the display interval when all display pixels included in the scanning lines are turned on/off may be decreased.

According to an embodiment, when the flexible display is in the partially extended state where the scan rate is changed to 75Hz, the proximity sensor may operate the light emitting unit 1830, a second delay 1831 after the Vsync signal is detected. According to an embodiment, the second delay 1831 may be shorter than the first delay 1821. For example, the second delay 1831 may be about 60/75 times the first delay 1821.

According to an embodiment, when the scan rate is changed, the proximity sensor may ignore a change in the number of scanning lines. According to an embodiment, the proximity sensor may operate the light emitting unit 1830 further considering that the number of scanning lines increases. For example, since a delay increases when the number of scanning lines is 1.25A compared to when it is A, when the change in the number of scanning lines is further considered, the second delay 1831 may be larger than about 60/75 times the first delay 1821.

According to an embodiment, when the flexible display is maximally extended in the lower direction while the optical sensor 1020 is fixed, the exposed area 1811 in the state extended in the lower direction includes an increased number of scanning lines, and B pixels may be disposed in each scanning line. For example, the increased number of scan lines may be 1.5A. According to an embodiment, the scan rate of the display may be changed to 90Hz. According to an embodiment, as the display scan rate is changed to 90Hz, a period of the Vsync signal may also be changed to about 11.1ms, which is the reciprocal of the scan rate.

According to an embodiment, when the flexible display is in the maximally extended state, the proximity sensor may operate the light emitting unit 1840 in an interval except for a display interval when all display pixels included in the scanning lines of the exposed area are turned on/off among intervals between a Vsync signal and a next Vsync signal, which has a length of about 11.1ms.

According to an embodiment, when the flexible display is in the partially extended state where the scan rate is changed to 90Hz, the proximity sensor may operate the light emitting unit 1840, a second delay 1841 after the Vsync signal is detected. According to an embodiment, the third delay 1841 may be shorter than the first delay 1821 and the second delay 1831. For example, the third delay 1841 may be about 60/90 times the first delay 1821.

According to an embodiment, when the scan rate is changed, the proximity sensor may ignore a change in the number of scanning lines. According to an embodiment, the proximity sensor may operate the light emitting unit 1840 further considering that the number of scanning lines increases. For example, since a delay increases when the number of scanning lines is 1.5A compared to when it is A, when the change in the number of scanning lines is further considered, the third delay 1841 may be larger than about 60/90 times the first delay 1821.

According to an embodiment, when a size of the exposed area of the flexible display increases with a scan rate change, since operation timing of the proximity sensor is related to a Vsync period changed according to the scan rate change and/or an entire interval when display pixels are turned on/off is related to the number of scanning lines included in the exposed area, if the scan rate and the number of scanning lines are the same, operation timing of the proximity sensor may be substantially the same when the extension direction of the flexible display is in the upper direction and when it is in the lower direction.

As such, when a position of the proximity sensor is fixed and the exposed area of the flexible display is increased while the scan rate is changed, operation timing of the proximity sensor is adjusted according to the scan rate and/or the number of activated scanning lines, thereby reducing a photoelectric effect.

According to an embodiment, although FIGS. 17 and 18 illustrate that the number of scanning lines is also changed along with the scan rate change, only the scan rate may be changed without display extension. According to an embodiment, when only the scan rate is changed from 60Hz to 75Hz without display extension, a delay may be smaller than the second delays 1731, 1831. According to an embodiment, when only the scan rate is changed to 90Hz without display extension, a delay may be smaller than the third delays 1741, 1841.

FIG. 19 is a view illustrating an operation of an illuminance sensor according to an extension/contraction operation of an upper end without a scan rate change of a flexible display of an electronic device according to an embodiment. For example, FIG. 19 illustrates a process in which light emission timing of an illuminance sensor is changed in real-time while the flexible display increases in the upper direction with the scan rate of the flexible display being maintained.

Referring to FIG. 19, an exposed area 1910 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an illuminance sensor 1920 (e.g., the sensor module 176 of FIG. 1) may be disposed on a rear surface of an upper area of the exposed area 1910 when the flexible display is in the contracted state.

According to an embodiment, when the flexible display is in the contracted state, the illuminance sensor may operate a light receiving unit in an interval when display pixels included in an nth scanning line affecting the illuminance sensor 1920 are turned off among intervals between a Vsync signal and a next Vsync signal. According to an embodiment, when the flexible display is in the contracted state, a period of the Vsync signal is about 16.6ms, which is the reciprocal of the scan rate. According to an embodiment, the illuminance sensor may operate the light receiving unit for the first time after the Vsync signal is detected in an interval when display pixels included in the nth scanning line are turned off for the first time after being turned on within the Vsync signal period.

According to an embodiment, the illuminance sensor may operate the light receiving unit at a first period 1931, a first delay 1930 after the Vsync signal is detected. According to an embodiment, when the display signal has 4 duty, the light receiving unit operation of the illuminance sensor may also be performed 4 times within one Vsync period.

According to an embodiment, when the flexible display is partially extended in the upper direction while the illuminance sensor 1920 is fixed, an exposed area 1911 in the state partially extended in the upper direction includes an increased number of scanning lines, and B pixels may be disposed in each scanning line. For example, the increased number of scan lines may be 1.25A. According to an embodiment, the scan rate of the display may be maintained at 60Hz.

According to an embodiment, when the flexible display is partially extended in the upper direction, an order of the scanning lines starts from the portion extended in the upper direction. Therefore, an interval when display pixels included in an mth scanning line larger than n affecting the illuminance sensor 1920 are turned on may be pushed back compared to when the flexible display is in the contracted state.

According to an embodiment, when the flexible display is in the partially extended state where the number of scanning lines included in the exposed area is 1.25A, the illuminance sensor may operate the light receiving unit at a second period 1941, a second delay 1940 after the Vsync signal is detected. According to an embodiment, when the display signal has 4 duty, the light receiving unit operation of the illuminance sensor may also be performed 4 times within one Vsync period. According to an embodiment, the second delay 1940 may be longer than the first delay 1930.

According to an embodiment, even when the number of scanning lines increases by 1.25 times, since the scan rate is maintained at 60Hz, the Vsync period may be the same at about 16.6ms. According to an embodiment, since many scanning lines should operate within the same period, an on/off interval of display pixels included in the scanning lines may decrease. According to an embodiment, the second period 1941, which is an operation period of the light receiving unit operating in an off interval of the display pixels, may be shorter than the first period 1931.

According to an embodiment, when the flexible display is maximally extended in the upper direction while the illuminance sensor 1920 is fixed, the exposed area 1912 in the state maximally extended in the upper direction includes an increased number of scanning lines, and B pixels may be disposed in each scanning line. For example, the increased number of scan lines may be 1.5A. According to an embodiment, the scan rate of the display may be maintained at 60Hz.

According to an embodiment, the scanning lines affecting the illuminance sensor 1920 may be later than an order of the scanning lines affecting the illuminance sensor 1920 when the number of scanning lines included in the exposed area of the flexible display is 1.25A in the partially extended state.

According to an embodiment, an interval when display pixels included in a kth scanning line larger than m affecting the illuminance sensor 1920 are turned on may be pushed back compared to when the flexible display is in the contracted state and state partially extended in the upper direction.

According to an embodiment, when the flexible display is in the maximally extended state where the number of scanning lines included in the exposed area is 1.5A, the illuminance sensor may operate the light receiving unit at a third period 1951, a third delay 1950 after the Vsync signal is detected. According to an embodiment, when the display signal has 4 duty, the light receiving unit operation of the illuminance sensor may also be performed 4 times within one Vsync period. According to an embodiment, the third delay 1950 may be longer than the second delay 1940.

According to an embodiment, even when the number of scanning lines increases by 1.5 times, since the scan rate is maintained at 60Hz, the Vsync period may be the same at about 16.6ms. According to an embodiment, since many scanning lines should operate within the same period, an on/off interval of display pixels included in the scanning lines may decrease. According to an embodiment, the third period 1951, which is an operation period of the light receiving unit operating in an off interval of the display pixels, may be shorter than the second period 1941.

As such, when a position of the illuminance sensor is fixed and the exposed area of the flexible display is increased while the scan rate is maintained, operation timing of the illuminance sensor is adjusted according to the number of activated scanning lines, thereby reducing optical noise caused by display signals.

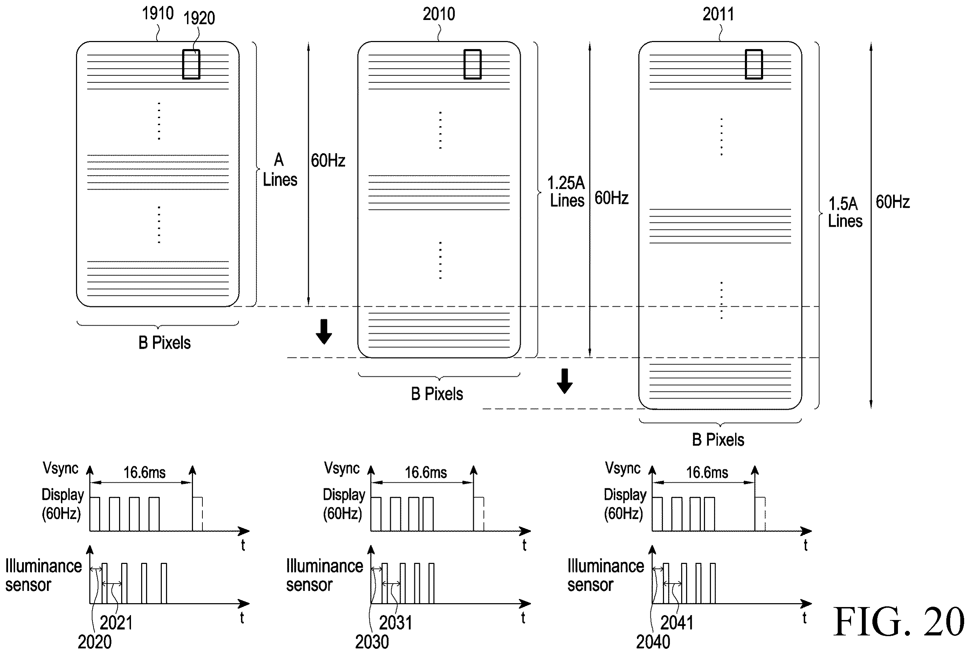

FIG. 20 is a view illustrating an operation of an illuminance sensor according to an extension/contraction operation of a lower end without a scan rate change of a flexible display of an electronic device according to an embodiment. For example, FIG. 20 illustrates a process in which light emission timing of an illuminance sensor is changed in real-time while the flexible display increases in the lower direction with the scan rate of the flexible display being maintained.

Referring to FIG. 20, an exposed area 1910 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an illuminance sensor 1920 (e.g., the sensor module 176 of FIG. 1) may be disposed on a rear surface of an upper area of the exposed area 1910 when the flexible display is in the contracted state.

According to an embodiment, when the flexible display is in the contracted state, the illuminance sensor may operate a light receiving unit in an interval when display pixels included in an nth scanning line affecting the illuminance sensor 1920 are turned off among intervals between a Vsync signal and a next Vsync signal. According to an embodiment, when the flexible display is in the contracted state, a period of the Vsync signal is about 16.6ms, which is the reciprocal of the scan rate. According to an embodiment, the illuminance sensor may operate the light receiving unit for the first time after the Vsync signal is detected in an interval when display pixels included in the nth scanning line are turned off for the first time after being turned on within the Vsync signal period.

According to an embodiment, the illuminance sensor may operate the light receiving unit at a first period 2021, a first delay 2020 after the Vsync signal is detected. According to an embodiment, when the display signal has 4 duty, the light receiving unit operation of the illuminance sensor may also be performed 4 times within one Vsync period.

According to an embodiment, when the flexible display is partially extended in the lower direction while the illuminance sensor 1920 is fixed, the exposed area 2010 in the state partially extended in the lower direction includes an increased number of scanning lines, and B pixels may be disposed in each scanning line. For example, the increased number of scan lines may be 1.25A. According to an embodiment, the scan rate of the display may be maintained at 60Hz.

According to an embodiment, the scanning lines affecting the illuminance sensor 1920 may have the same order as the scanning lines affecting the illuminance sensor 1920 when the flexible display is in the contracted state.

According to an embodiment, when the flexible display is partially extended in the lower direction without a scan rate change, since on/off of more scanning lines should be performed within the same Vsync period, an on/off period may decrease. According to an embodiment, an AOR, which is a ratio of an on interval and an off interval, may be maintained. Therefore, even when the flexible display is partially extended in the lower direction, the scanning line affecting the illuminance sensor 1920 is the nth scanning line, and an interval when display pixels included in the nth scanning line are turned off for the first time after being turned on may be pulled forward compared to when the flexible display is in the contracted state.

According to an embodiment, when the flexible display is in the partially extended state where the number of scanning lines included in the exposed area is 1.25A, the illuminance sensor may operate the light receiving unit at a second period 2031, a second delay 2030 after the Vsync signal is detected. According to an embodiment, when the display signal has 4 duty, the light receiving unit operation of the illuminance sensor may also be performed 4 times within one Vsync period. According to an embodiment, the second delay 2030 may be shorter than the first delay 2020. For example, the second delay 2030 may be about 1/1.25 times the first delay 2020.

According to an embodiment, even when the number of scanning lines increases by 1.25 times, since the scan rate is maintained at 60Hz, the Vsync period may be the same at about 16.6ms. According to an embodiment, since many scanning lines should operate within the same period, an on/off interval of display pixels included in the scanning lines may decrease. According to an embodiment, the second period 2031, which is an operation period of the light receiving unit operating in an off interval of the display pixels, may be shorter than the first period 2021.

According to an embodiment, when the flexible display is maximally extended in the lower direction while the illuminance sensor 1920 is fixed, the exposed area 2011 in the state maximally extended in the lower direction includes an increased number of scanning lines, and B pixels may be disposed in each scanning line. For example, the increased number of scan lines may be 1.5A. According to an embodiment, the scan rate of the display may be maintained at 60Hz.

According to an embodiment, the scanning lines affecting the illuminance sensor 1920 may have the same order as the scanning lines affecting the illuminance sensor 1920 when the flexible display is in the contracted state or partially extended state.

According to an embodiment, when the flexible display is maximally extended in the lower direction without a scan rate change, since on/off of more scanning lines should be performed within the same Vsync period, an on/off period may decrease. According to an embodiment, an AOR, which is a ratio of an on interval and an off interval, may be maintained. Therefore, even when the flexible display is maximally extended in the lower direction, the scanning line affecting the illuminance sensor 1920 is the nth scanning line, and an interval when display pixels included in the nth scanning line are turned off for the first time after being turned on may be pulled forward compared to when the flexible display is in the partially extended state.

According to an embodiment, when the flexible display is in the partially extended state where the number of scanning lines included in the exposed area is 1.5A, the illuminance sensor may operate the light receiving unit at a third period 2041, a third delay 2040 after the Vsync signal is detected. According to an embodiment, when the display signal has 4 duty, the light receiving unit operation of the illuminance sensor may also be performed 4 times within one Vsync period. According to an embodiment, the third delay 2040 may be shorter than the second delay 2030. For example, the third delay 2040 may be about 1/1.5 times the first delay 2020.

According to an embodiment, even when the number of scanning lines increases by 1.5 times, since the scan rate is maintained at 60Hz, the Vsync period may be the same at about 16.6ms. According to an embodiment, since many scanning lines should operate within the same period, an on/off interval of display pixels included in the scanning lines may decrease. According to an embodiment, the third period 2041, which is an operation period of the light receiving unit operating in an off interval of the display pixels, may be shorter than the second period 2031.

As such, when a position of the illuminance sensor is fixed and the exposed area of the flexible display is increased while the scan rate is maintained, operation timing of the illuminance sensor is adjusted according to the number of activated scanning lines, thereby reducing optical noise caused by display signals.

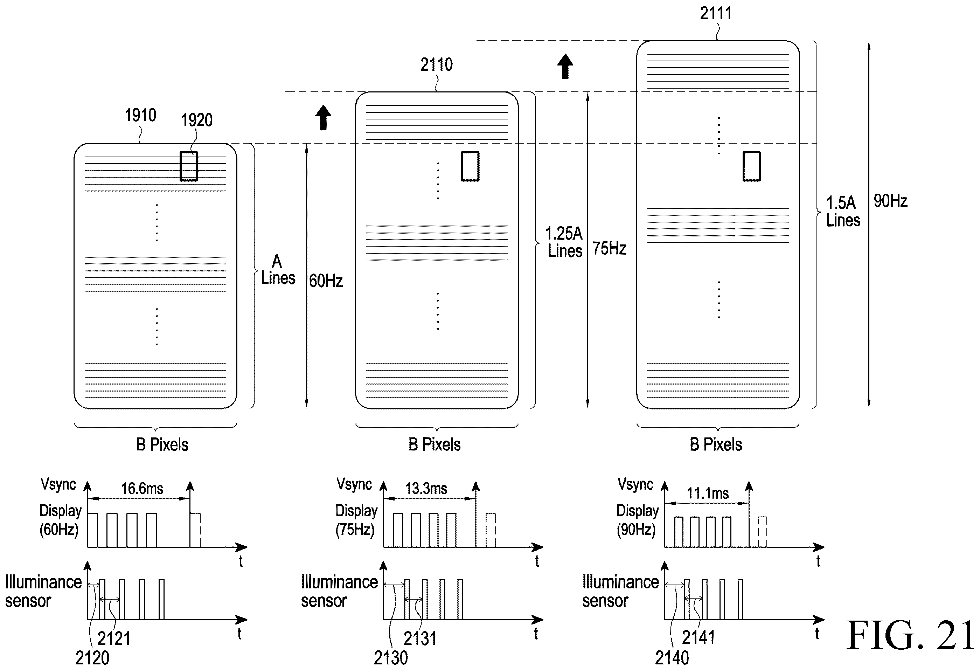

FIG. 21 is a view illustrating an operation of an illuminance sensor according to a scan rate change and an extension/contraction operation of an upper end of a flexible display of an electronic device according to an embodiment. For example, FIG. 21 illustrates a process in which light emission timing of an illuminance sensor is changed in real-time while the flexible display increases in the upper direction with the scan rate of the flexible display being changed.

Referring to FIG. 21, an exposed area 1910 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an illuminance sensor 1920 (e.g., the sensor module 176 of FIG. 1) may be disposed on a rear surface of an upper area of the exposed area 1910 when the flexible display is in the contracted state.

According to an embodiment, when the flexible display is in the contracted state, the illuminance sensor may operate a light receiving unit in an interval when display pixels included in an nth scanning line affecting the illuminance sensor 1920 are turned off among intervals between a Vsync signal and a next Vsync signal. According to an embodiment, when the flexible display is in the contracted state, a period of the Vsync signal is about 16.6ms, which is the reciprocal of the scan rate. According to an embodiment, the illuminance sensor may operate the light receiving unit for the first time after the Vsync signal is detected in an interval when display pixels included in the nth scanning line are turned off for the first time after being turned on within the Vsync signal period.

According to an embodiment, the illuminance sensor may operate the light receiving unit at a first period 2121, a first delay 2120 after the Vsync signal is detected. According to an embodiment, when the display signal has 4 duty, the light receiving unit operation of the illuminance sensor may also be performed 4 times within one Vsync period.

According to an embodiment, when the flexible display is partially extended in the upper direction while the illuminance sensor 1920 is fixed, an exposed area 2110 in the state partially extended in the upper direction includes an increased number of scanning lines, and B pixels may be disposed in each scanning line. For example, the increased number of scan lines may be 1.25A. According to an embodiment, the scan rate of the display may be changed to 75Hz.

According to an embodiment, as the display scan rate is changed to 75Hz, a period of the Vsync signal may also be changed to about 13.3ms, which is the reciprocal of the scan rate.

According to an embodiment, when the flexible display is partially extended in the upper direction, an order of the scanning lines starts from the portion extended in the upper direction. Therefore, an interval when display pixels included in an $m_{th}$ scanning line larger than n affecting the illuminance sensor 1920 are turned on may be pushed back compared to when the flexible display is in the contracted state.

According to an embodiment, when the flexible display is in the partially extended state where the number of scanning lines included in the exposed area is 1.25A, the illuminance sensor may operate the light receiving unit at a second period 2131, a second delay 2130 after the Vsync signal is detected. According to an embodiment, when the display signal has 4 duty, the light receiving unit operation of the illuminance sensor may also be performed 4 times within one Vsync period.

According to an embodiment, as the scan rate increases, a delay is decreased, and as a distance between an upper end of the exposed area and the illuminance sensor 1920 increases, a delay may be adjusted as an interval when display pixels included in the scanning line affecting the illuminance sensor 1920 are turned on is pushed back compared to when the flexible display is in the contracted state. According to an embodiment, the second delay 2130 may be longer or shorter than the first delay 2120 according to a scan rate change ratio and a degree of flexible display extension.

According to an embodiment, as the number of scanning lines increases by 1.25 times and the scan rate increases by 1.25 times to 75Hz, the Vsync period may be changed to 13.3ms. According to an embodiment, an on/off interval of display pixels may decrease based on the shortened Vsync period. According to an embodiment, the second period 2131, which is an operation period of the light receiving unit operating in an off interval of the display pixels, may be shorter than the first period 2121. For example, the second period 2131 may be 60/75 times the first period 2121.

According to an embodiment, when the flexible display is maximally extended in the upper direction while the illuminance sensor 1920 is fixed, the exposed area 2111 in the state maximally extended in the upper direction includes an increased number of scanning lines, and B pixels may be disposed in each scanning line. For example, the increased number of scan lines may be 1.5A. According to an embodiment, the scan rate of the display may be changed to 90Hz.

According to an embodiment, as the display scan rate is changed to 90Hz, a period of the Vsync signal may also be changed to about 11.1ms, which is the reciprocal of the scan rate.

According to an embodiment, the scanning lines affecting the illuminance sensor 1920 may be later than an order of the scanning lines affecting the illuminance sensor 1920 when the number of scanning lines included in the exposed area of the flexible display is 1.25A in the partially extended state.

According to an embodiment, an interval when display pixels included in a kth scanning line larger than m affecting the illuminance sensor 1920 are turned on may be pushed back compared to when the flexible display is in the contracted state and state partially extended in the upper direction.

According to an embodiment, when the flexible display is in the maximally extended state where the number of scanning lines included in the exposed area is 1.5A, the illuminance sensor may operate the light receiving unit at a third period 2141, a third delay 2140 after the Vsync signal is detected. According to an embodiment, when the display signal has 4 duty, the light receiving unit operation of the illuminance sensor may also be performed 4 times within one Vsync period.

According to an embodiment, as the scan rate increases, a delay is decreased, and as a distance between an upper end of the exposed area and the illuminance sensor 1920 increases, a delay may be adjusted as an interval when display pixels included in the scanning line affecting the illuminance sensor 1920 are turned on is pushed back compared to when the flexible display is in the contracted state. According to an embodiment, the third delay 2140 may be longer or shorter than the first delay 2120 or the second delay 2130 according to a scan rate change ratio and a degree of flexible display extension.

According to an embodiment, as the number of scanning lines increases by 1.5 times and the scan rate increases by 1.5 times to 90Hz, the Vsync period may be changed to about 11.1ms. According to an embodiment, an on/off interval of display pixels may decrease based on the shortened Vsync period. According to an embodiment, the third period 2141, which is an operation period of the light receiving unit operating in an off interval of the display pixels, may be shorter than the first period 2121. For example, the third period 2141 may be 60/90 times the first period 2121.

As such, when a position of the illuminance sensor is fixed and the exposed area of the flexible display is increased while the scan rate is maintained, operation timing of the illuminance sensor is adjusted according to the number of activated scanning lines, thereby reducing optical noise caused by display signals.

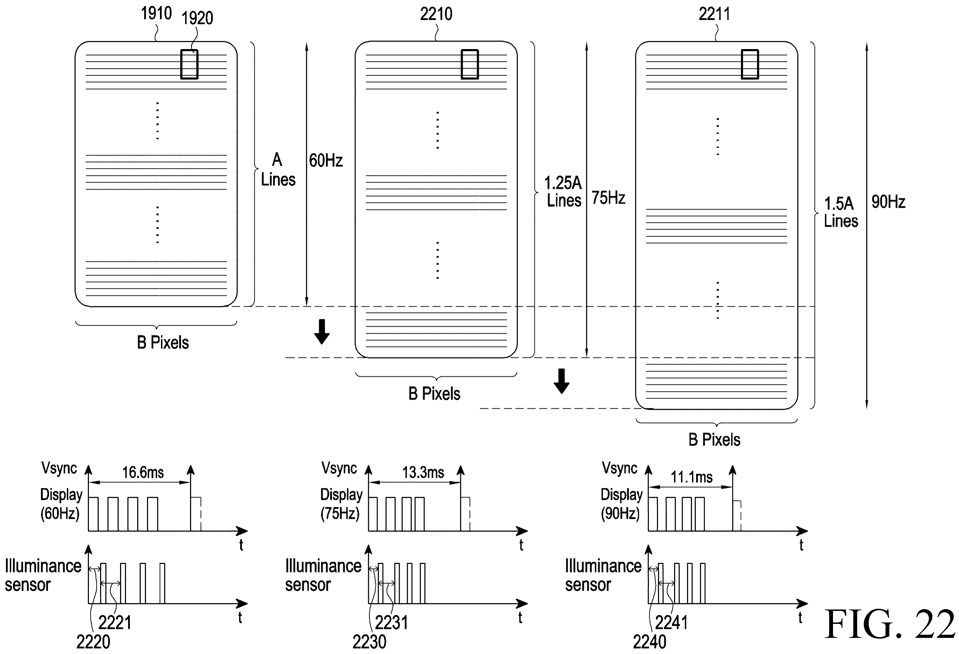

FIG. 22 is a view illustrating an operation of an illuminance sensor according to a scan rate change and an extension/contraction operation of a lower end of a flexible display of an electronic device according to an embodiment. For example, FIG. 22 illustrates a process in which light emission timing of an illuminance sensor is changed in real-time while the flexible display increases in the lower direction with the scan rate of the flexible display being changed.

Referring to FIG. 22, an exposed area 1910 in a state in which the flexible display (e.g., the display module 160 of FIG. 1) is contracted on the left includes A scanning lines, and B pixels may be disposed in each scanning line. For example, a display scan rate when the flexible display is in the contracted state may be 60Hz.

According to an embodiment, an illuminance sensor 1920 (e.g., the sensor module 176 of FIG. 1) may be disposed on a rear surface of an upper area of the exposed area 1910 when the flexible display is in the contracted state.

According to an embodiment, when the flexible display is in the contracted state, the illuminance sensor may operate a light receiving unit in an interval when display pixels included in an nth scanning line affecting the illuminance sensor 1920 are turned off among intervals between a Vsync signal and a next Vsync signal. According to an embodiment, when the flexible display is in the contracted state, a period of the Vsync signal is about 16.6ms, which is the reciprocal of the scan rate. According to an embodiment, the illuminance sensor may operate the light receiving unit for the first time after the Vsync signal is detected in an interval when display pixels included in the nth scanning line are turned off for the first time after being turned on within the Vsync signal period.

According to an embodiment, the illuminance sensor may operate the light receiving unit at a first period 2221, a first delay 2220 after the Vsync signal is detected. According to an embodiment, when the display signal has 4 duty, the light receiving unit operation of the illuminance sensor may also be performed 4 times within one Vsync period.

According to an embodiment, when the flexible display is partially extended in the lower direction while the illuminance sensor 1920 is fixed, the exposed area 2210 in the state partially extended in the lower direction includes an increased number of scanning lines, and B pixels may be disposed in each scanning line. For example, the increased number of scan lines may be 1.25A. According to an embodiment, the scan rate of the display may be changed to 75Hz.

According to an embodiment, as the display scan rate is changed to 75Hz, a period of the Vsync signal may also be changed to about 13.3ms, which is the reciprocal of the scan rate.

According to an embodiment, the scanning lines affecting the illuminance sensor 1920 may have the same order as the scanning lines affecting the illuminance sensor 1920 when the flexible display is in the contracted state.

According to an embodiment, when the flexible display is partially extended in the lower direction without a scan rate change, since on/off of more scanning lines should be performed within the same Vsync period, an on/off period may decrease. According to an embodiment, an AOR, which is a ratio of an on interval and an off interval, may be maintained. Therefore, even when the flexible display is partially extended in the lower direction, the scanning line affecting the illuminance sensor 1920 is the nth scanning line, and an interval when display pixels included in the nth scanning line are turned off for the first time after being turned on may be pulled forward compared to when the flexible display is in the contracted state.

According to an embodiment, when the flexible display is in the partially extended state where the number of scanning lines included in the exposed area is 1.25A, the illuminance sensor may operate the light receiving unit at a second period 2231, a second delay 2230 after the Vsync signal is detected. According to an embodiment, when the display signal has 4 duty, the light receiving unit operation of the illuminance sensor may also be performed 4 times within one Vsync period. According to an embodiment, the second delay 2230 may be shorter than the first delay 2220. For example, the second delay 2230 may be about 1/1.25 times the first delay 2220.

According to an embodiment, as the number of scanning lines increases by 1.25 times and the scan rate increases by 1.25 times to 75Hz, the Vsync period may be the same at about 13.3ms. According to an embodiment, an on/off interval of display pixels may decrease based on the shortened Vsync period. According to an embodiment, the second period 2231, which is an operation period of the light receiving unit operating in an off interval of the display pixels, may be shorter than the first period 2221. For example, the second period 2231 may be 60/75 times the first period 2221.

According to an embodiment, when the flexible display is maximally extended in the lower direction while the illuminance sensor 1920 is fixed, the exposed area 2211 in the state maximally extended in the lower direction includes an increased number of scanning lines, and B pixels may be disposed in each scanning line. For example, the increased number of scan lines may be 1.5A. According to an embodiment, the scan rate of the display may be changed to 90Hz.

According to an embodiment, the scanning lines affecting the illuminance sensor 1920 may have the same order as the scanning lines affecting the illuminance sensor 1920 when the flexible display is in the contracted state or partially extended state.

According to an embodiment, when the flexible display is maximally extended in the lower direction without a scan rate change, since on/off of more scanning lines should be performed within the same Vsync period, an on/off period may decrease. According to an embodiment, an AOR, which is a ratio of an on interval and an off interval, may be maintained. Therefore, even when the flexible display is maximally extended in the lower direction, the scanning line affecting the illuminance sensor 1920 is the nth scanning line, and an interval when display pixels included in the nth scanning line are turned off for the first time after being turned on may be pulled forward compared to when the flexible display is in the partially extended state.

According to an embodiment, when the flexible display is in the partially extended state where the number of scanning lines included in the exposed area is 1.5A, the illuminance sensor may operate the light receiving unit at a third period 2241, a third delay 2440 after the Vsync signal is detected. According to an embodiment, when the display signal has 4 duty, the light receiving unit operation of the illuminance sensor may also be performed 4 times within one Vsync period. According to an embodiment, the third delay 2240 may be shorter than the second delay 2230 and the first delay 2220. For example, the third delay 2240 may be about 1/1.5 times the first delay 2220.

According to an embodiment, as the number of scanning lines increases by 1.5 times and the scan rate increases by 1.5 times to 90Hz, the Vsync period may be the same at about 11.1ms. According to an embodiment, an on/off interval of display pixels may decrease based on the shortened Vsync period. According to an embodiment, the third period 2241, which is an operation period of the light receiving unit operating in an off interval of the display pixels, may be shorter than the second period 2231 and the first period 2221. For example, the third period 2241 may be 60/90 times the first period 2231.

As such, when a position of the illuminance sensor is fixed and the exposed area of the flexible display is increased while the scan rate is maintained, operation timing of the illuminance sensor is adjusted according to the number of activated scanning lines, thereby reducing optical noise caused by display signals.

According to an embodiment, although FIGS. 21 and 22 illustrate that the number of scanning lines is also changed along with the scan rate change, only the scan rate may be changed without display extension. According to an embodiment, when only the scan rate is changed from 60Hz to 75Hz without display extension, a delay may be larger than the second delays 2131, 2231. According to an embodiment, when only the scan rate is changed to 90Hz without display extension, a delay may be larger than the third delays 2141, 2241.

According to an embodiment, although FIGS. 9 to 22 describe only embodiments in which the flexible display is extended from a contracted state, even when the flexible display is contracted from an extended state, operation timing of the optical sensor may be adjusted according to a change in the number of scanning lines and/or a scan rate change based on the disclosure.

According to an embodiment, an electronic device (e.g., the electronic device 101 of FIG. 1) may comprise a housing (e.g., the housing 210 of FIG. 2), a flexible display (e.g., the display module 160 of FIG. 1, the display 203 of FIG. 2) having at least a portion exposed to an outside through the housing, at least one optical sensor (e.g., the sensor module 176 of FIG. 1), and at least one processor (e.g., the processor 120 of FIG. 1) operatively connected to the flexible display and the optical sensor.

According to an embodiment, the at least one processor may identify information related to a size of an exposed area of the flexible display while the size of the exposed area of the flexible display is varied.

According to an embodiment, the at least one processor may control an operation of the optical sensor to adjust a delay between a Vsync signal related to the flexible display and a sensing operation of the optical sensor based on the information related to the size of the exposed area.

According to an embodiment, the optical sensor may include a light emitting unit and a light receiving unit detecting light emitted from the light emitting unit.

According to an embodiment, the at least one processor may control an operation of the light emitting unit so that the delay is increased based on an increase in a number of scan lines included in the exposed area.

According to an embodiment, the at least one processor may identify that an interval during which a display signal is not applied to the scan lines included in the exposed area is reduced based on the increase in the number of the scan lines included in the exposed area.

According to an embodiment, the at least one processor may control an operation of the light emitting unit to perform the sensing operation during an interval before the Vsync signal included in the reduced interval is applied in the reduced interval.

According to an embodiment, the at least one processor may control an operation of the optical sensor to adjust the delay in proportion to a ratio of a first period and a second period while a period of the Vsync signal is changed from the first period to the second period.

According to an embodiment, the period of the Vsync signal may be changed based on at least one of a manufacturer's setting, a type of an executed application, or a type of displayed content.

According to an embodiment, the optical sensor may include a light receiving unit detecting ambient light of the electronic device.

According to an embodiment, the optical sensor may control the light receiving unit to operate with the delay and a period corresponding to an interval during which a display signal of the flexible display is turned off.

According to an embodiment, the at least one processor may control an operation of the light receiving unit to adjust the delay and the period based on a change in a ratio of the number of the scan lines according to an increase in the size of the exposed area.

According to an embodiment, the at least one processor may, based on a change in a distance between an upper end of the exposed area and the optical sensor according to a change in the size of the exposed area, control an operation of the light receiving unit to adjust the delay further considering the distance.

According to an embodiment, the at least one processor may control an operation of the light receiving unit to adjust the delay and the period in proportion to a ratio of a first period and a second period while a period of the Vsync signal is changed from the first period to the second period.

According to an embodiment, the at least one processor may transfer an operation command based on the information related to the size of the exposed area to the optical sensor.

According to an embodiment, the optical sensor may detect the Vsync signal generated from the flexible display.

According to an embodiment, the optical sensor may adjust the delay from the detected Vsync signal based on the operation command.

According to an embodiment, the at least one processor may transfer the information related to the size of the exposed area to the optical sensor.

According to an embodiment, the optical sensor may detect the Vsync signal generated from the flexible display.

According to an embodiment, the optical sensor may adjust a delay based on the information related to the size of the exposed area, and operate with the adjusted delay.

According to an embodiment, a method for controlling an electronic device may comprise identifying information related to a size of an exposed area of a flexible display of the electronic device while the size of the exposed area of the flexible display is varied.

According to an embodiment, the method for controlling the electronic device may comprise controlling an operation of an optical sensor of the electronic device to adjust a delay between a Vsync signal related to the flexible display and a sensing operation of the optical sensor based on the information related to the size of the exposed area.

According to an embodiment, controlling the operation of the optical sensor may control an operation of the light emitting unit so that the delay is increased based on an increase in a number of scan lines included in the exposed area.

According to an embodiment, controlling the operation of the optical sensor may identify that an interval during which a display signal is not applied to the scan lines included in the exposed area is reduced based on the increase in the number of the scan lines included in the exposed area.

According to an embodiment, controlling the operation of the optical sensor may control an operation of the light emitting unit to perform the sensing operation during an interval before the Vsync signal included in the reduced interval is applied in the reduced interval.

According to an embodiment, controlling the operation of the optical sensor may control an operation of the light emitting unit to adjust the delay in proportion to a ratio of a first period and a second period while a period of the Vsync signal is changed from the first period to the second period.

According to an embodiment, the period of the Vsync signal may be changed based on at least one of a manufacturer's setting, a type of an executed application, or a type of displayed content.

According to an embodiment, the optical sensor may include a light receiving unit detecting ambient light of the electronic device.

According to an embodiment, the optical sensor may control the light receiving unit to operate with the delay and a period corresponding to an interval during which a display signal of the flexible display is turned off.

According to an embodiment, controlling the operation of the optical sensor may control an operation of the light receiving unit to adjust the delay and the period based on a change in a ratio of the number of the scan lines according to an increase in the size of the exposed area.

According to an embodiment, an electronic device may comprise a display, at least one optical sensor, and at least one processor operatively connected to the display and the optical sensor.

According to an embodiment, the at least one processor may identify that a period of a Vsync signal of the display is varied.

According to an embodiment, the at least one processor may control the optical sensor to adjust a delay between a Vsync signal related to the display and a sensing operation of the optical sensor based on the period of the Vsync signal being varied.

According to an embodiment, the at least one processor may identify that the period of the Vsync signal is changed from a first period to a second period.

According to an embodiment, the at least one processor may control the optical sensor to adjust the delay in proportion to a ratio of the first period and the second period.

According to an embodiment, the at least one processor may control an operation of the optical sensor to adjust a sensing period of the optical sensor in proportion to the ratio of the first period and the second period.

According to an embodiment, the period of the Vsync signal may be changed based on at least one of a manufacturer's setting, a type of an executed application, or a type of displayed content.

According to an embodiment, in a non-transitory computer-readable recording medium storing one or more programs, the one or more programs may comprise instructions for an electronic device to identify information related to a size of an exposed area of a flexible display while the size of the exposed area of the flexible display is varied.

According to an embodiment, the one or more programs may comprise instructions for the electronic device to control an operation of the optical sensor to adjust a delay between a Vsync signal related to the flexible display and a sensing operation of the optical sensor based on the information related to the size of the exposed area.

According to an embodiment, the optical sensor may include a light emitting unit and a light receiving unit detecting light emitted from the light emitting unit.

According to an embodiment, the one or more programs may comprise instructions for the electronic device to control an operation of the light emitting unit so that the delay is increased based on an increase in a number of scan lines included in the exposed area.

According to an embodiment, the one or more programs may comprise instructions for the electronic device to identify that an interval during which a display signal is not applied to the scan lines included in the exposed area is reduced based on the increase in the number of the scan lines included in the exposed area.

According to an embodiment, the one or more programs may comprise instructions for the electronic device to control an operation of the light emitting unit to perform the sensing operation during an interval before the Vsync signal included in the reduced interval is applied in the reduced interval.

According to an embodiment, the one or more programs may comprise instructions for the electronic device to control an operation of the optical sensor to adjust the delay in proportion to a ratio of a first period and a second period while a period of the Vsync signal is changed from the first period to the second period.

According to an embodiment, the period of the Vsync signal may be changed based on at least one of a manufacturer's setting, a type of an executed application, or a type of displayed content.

According to an embodiment, the optical sensor may include a light receiving unit detecting ambient light of the electronic device.

According to an embodiment, the one or more programs may comprise instructions for the electronic device to control the light receiving unit to operate with the delay and a period corresponding to an interval during which a display signal of the flexible display is turned off.

According to an embodiment, the one or more programs may comprise instructions for the electronic device to control an operation of the light receiving unit to adjust the delay and the period based on a change in a ratio of the number of the scan lines according to an increase in the size of the exposed area.

According to an embodiment, the one or more programs may comprise instructions for the electronic device to, based on a change in a distance between an upper end of the exposed area and the optical sensor according to a change in the size of the exposed area, control an operation of the light receiving unit to adjust the delay further considering the distance.

According to an embodiment, the one or more programs may comprise instructions for the electronic device to control an operation of the light receiving unit to adjust the delay and the period in proportion to a ratio of a first period and a second period while a period of the Vsync signal is changed from the first period to the second period.

According to an embodiment, the one or more programs may comprise instructions for the electronic device to transfer an operation command based on the information related to the size of the exposed area to the optical sensor.

According to an embodiment, the one or more programs may comprise instructions for the electronic device to detect the Vsync signal generated from the flexible display through the optical sensor.

According to an embodiment, the one or more programs may comprise instructions for the electronic device to adjust the delay from the detected Vsync signal based on the operation command through the optical sensor.

According to an embodiment, the one or more programs may comprise instructions for the electronic device to transfer the information related to the size of the exposed area to the optical sensor.

According to an embodiment, the one or more programs may comprise instructions for the electronic device to detect the Vsync signal generated from the flexible display through the optical sensor.

According to an embodiment, the one or more programs may comprise instructions for the electronic device to adjust the delay based on the information related to the size of the exposed area through the optical sensor and operate with the adjusted delay.

According to an embodiment, in a non-transitory computer-readable recording medium storing one or more programs, the one or more programs may comprise instructions for an electronic device to identify that a period of a Vsync signal of the display is varied.

According to an embodiment, the one or more programs may comprise instructions for the electronic device to control the optical sensor to adjust a delay between a Vsync signal related to the display and a sensing operation of the optical sensor based on the period of the Vsync signal being varied.

According to an embodiment, the one or more programs may comprise instructions for the electronic device to identify that the period of the Vsync signal is changed from a first period to a second period.

According to an embodiment, the one or more programs may comprise instructions for the electronic device to control the optical sensor to adjust the delay in proportion to a ratio of the first period and the second period.

According to an embodiment, the one or more programs may comprise instructions for the electronic device to control an operation of the optical sensor to adjust a sensing period of the optical sensor in proportion to the ratio of the first period and the second period.

According to an embodiment, the period of the Vsync signal may be changed based on at least one of a manufacturer's setting, a type of an executed application, or a type of displayed content.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101).For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

   a housing;
   a flexible display having at least a portion exposed to an outside through the housing;
   at least one optical sensor;
   at least one processor; and
   memory storing instructions, wherein the instructions, when executed by the at least one processor individually or collectively, cause the electronic device to:

      identify information related to a size of an exposed area of the flexible display while the size of the exposed area of the flexible display is varied; and
      control an operation of the optical sensor to adjust a delay between a Vsync signal related to the flexible display and a sensing operation of the optical sensor based on the information related to the size of the exposed area.

2. The electronic device of claim 1, wherein the optical sensor includes:

   a light emitting unit; and
   a light receiving unit configured to detect light emitted from the light emitting unit, and
   wherein the instructions cause the electronic device to control an operation of the light emitting unit so that the delay is increased based on an increase in a number of scan lines included in the exposed area.

3. The electronic device of claim 2, wherein the instructions cause the electronic device to:

   identify that an interval during which a display signal is not applied to the scan lines included in the exposed area is reduced based on the increase in the number of the scan lines included in the exposed area; and
   control an operation of the light emitting unit to perform the sensing operation during an interval before the Vsync signal included in the reduced interval is applied in the reduced interval.

4. The electronic device of any one of claims 1 to 3, wherein the instructions cause the electronic device to:
   control an operation of the optical sensor to adjust the delay in proportion to a ratio of a first period and a second period while a period of the Vsync signal is changed from the first period to the second period.

5. The electronic device of claim 4, wherein the period of the Vsync signal is changed based on at least one of a manufacturer's setting, a type of an executed application, or a type of displayed content.

6. The electronic device of any one of claims 1 to 5, wherein the optical sensor includes a light receiving unit configured to detect ambient light of the electronic device, and is configured to control the light receiving unit to operate with the delay and a period corresponding to an interval during which a display signal of the flexible display is turned off, and wherein the instructions cause the electronic device to: control an operation of the light receiving unit to adjust the delay and the period based on a change in a ratio of the number of the scan lines according to an increase in the size of the exposed area.

7. The electronic device of claim 6, wherein the instructions cause the electronic device to, based on a change in a distance between an upper end of the exposed area and the optical sensor according to a change in the size of the exposed area, control an operation of the light receiving unit to adjust the delay further considering the distance.

8. The electronic device of claim 6 or 7, wherein the instructions cause the electronic device to:
control an operation of the light receiving unit to adjust the delay and the period in proportion to a ratio of a first period and a second period while a period of the Vsync signal is changed from the first period to the second period.

9. The electronic device of any one of claims 1 to 8, wherein the instructions cause the electronic device to:
transfer an operation command based on the information related to the size of the exposed area to the optical sensor, and wherein the optical sensor is configured to:

detect the Vsync signal generated from the flexible display; and
adjust the delay from the detected Vsync signal based on the operation command.

10. The electronic device of any one of claims 1 to 9, wherein the instructions cause the electronic device to:

transfer the information related to the size of the exposed area to the optical sensor, and
wherein the optical sensor is configured to:

detect the Vsync signal generated from the flexible display; and
adjust a delay based on the information related to the size of the exposed area, and operate with the adjusted delay.

11. A method for controlling an electronic device, the method comprising:

identifying information related to a size of an exposed area of a flexible display of the electronic device while the size of the exposed area of the flexible display is varied; and
controlling an operation of an optical sensor of the electronic device to adjust a delay between a Vsync signal related to the flexible display and a sensing operation of the optical sensor based on the information related to the size of the exposed area.

12. The method of claim 11, wherein the optical sensor includes:

a light emitting unit; and
a light receiving unit detecting light emitted from the light emitting unit,
wherein controlling the operation of the optical sensor controls an operation of the light emitting unit so that the delay is increased based on an increase in a number of scan lines included in the exposed area.

13. The method of claim 12, wherein controlling the operation of the optical sensor:

identifies that an interval during which a display signal is not applied to the scan lines included in the exposed area is reduced based on the increase in the number of the scan lines included in the exposed area; and
controls an operation of the light emitting unit to perform the sensing operation during an interval before the Vsync signal included in the reduced interval is applied in the reduced interval.

14. The method of claim 11, wherein controlling the operation of the optical sensor controls an operation of the light emitting unit to adjust the delay in proportion to a ratio of a first period and a second period while a period of the Vsync signal is changed from the first period to the second period.

15. The method of claim 14, wherein the period of the Vsync signal is changed based on at least one of a manufacturer's setting, a type of an executed application, or a type of displayed content.

FIG. 1

EP 4 682 858 A1

FIG. 2

EP 4 682 858 A1

FIG. 3

37

# FIG. 4

FIG. 5A

EP 4 682 858 A1

EP 4 682 858 A1

FIG. 5B

FIG. 6A

620

AP
(Processor)

621

Display
Control
Module

160

641

Display Driver IC

642

Sync
Pin

640

Display Pixel

630

Sensor Hub
(Processor)

176

654

Sync
Pin

650

Sensor IC

PS Module

652

ALS Module

653

Photodiode

651

## FIG. 6B

661

660

662

176

663

## FIG. 6C

START

IDENTIFY INFORMATION RELATED TO SIZE OF
EXPOSED AREA WHILE SIZE OF
EXPOSED AREA OF FLEXIBLE DISPLAY IS VARIED ~710

CONTROL OPERATION OF OPTICAL SENSOR TO
ADJUST DELAY BETWEEN VSYNC SIGNAL
RELATED TO FLEXIBLE DISPLAY AND
SENSING OPERATION OF OPTICAL SENSOR BASED ON
INFORMATION RELATED TO SIZE OF EXPOSED AREA ~720

END

# FIG. 7

START

IDENTIFY OPERATION
OF OPTICAL SENSOR — 801

SIZE OF DISPLAY CHANGED? — 802 — NO

YES — 803

IDENTIFY DISPLAY SCAN RATE
AND/OR NUMBER OF SCAN LINES

CALCULATE tPSDelay
CALCULATE tALSDelay
CALCULATE tALSPeriod — 804

OPTICAL SENSOR OPERATION — 805

IDENTIFY DISPLAY SCAN RATE — 806

CALCULATE tPSDelay
CALCULATE tALSDelay
CALCULATE tALSPeriod — 807

OPTICAL SENSOR OPERATION — 808

END

FIG. 8

FIG. 9

FIG. 10

FIG. 11A

FIG. 11B

FIG. 12A

FIG. 12B

1011

1310

1010  1020

1.5A
Lines | 60Hz

1.25A
Lines | 60Hz

A
Lines | 60Hz

B Pixels

B Pixels

B Pixels

Vsync
16.6ms

Display
(60Hz)

Proximity
sensor

1321  1320

Vsync
16.6ms

1331  1330

Vsync
16.6ms

1341  1340

FIG. 13

1010  1020

1411  1020

A
Lines  60Hz

1.5A
Lines  60 Hz

B Pixels

B Pixels

# FIG. 14

Display 60Hz
(lower end extended state)

FIG. 15A

FIG. 15B

FIG. 16

FIG. 17

EP 4 682 858 A1

FIG. 18

FIG. 19

FIG. 20

FIG. 21

FIG. 22

EP 4 682 858 A1

## INTERNATIONAL SEARCH REPORT

| International application No. |
| --- |
| **PCT/KR2024/004282** |

| | |
| --- | --- |
| **A. CLASSIFICATION OF SUBJECT MATTER** | |
| **G09G 3/00**(2006.01)i; **G09G 3/3208**(2016.01)i | |

According to International Patent Classification (IPC) or to both national classification and IPC

**B. FIELDS SEARCHED**

Minimum documentation searched (classification system followed by classification symbols)

G09G 3/00(2006.01); G06F 1/16(2006.01); G06Q 30/02(2012.01); G06T 7/90(2017.01); G09F 9/30(2006.01); G09F 9/33(2006.01); G09G 3/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블 디스플레이(flexible display), 광센서(optical sensor), 딜레이(delay), 수직 동기 신호(vertical synchronizing signal), 주기(cycle), 노출 영역(exposed area), 주사율(refresh rate)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0111519 A (SAMSUNG ELECTRONICS CO., LTD.) 29 September 2020 (2020-09-29)<br>See paragraphs [0064] and [0074]-[0170]; claims 1 and 13-14; and figures 4-16. | 1-15 |
| A | KR 10-2023-0033332 A (SAMSUNG ELECTRONICS CO., LTD.) 08 March 2023 (2023-03-08)<br>See paragraphs [0053]-[0101]; claims 1-2 and 10; and figures 4a-10. | 1-15 |
| A | WO 2022-232732 A1 (QUALCOMM INCORPORATED) 03 November 2022 (2022-11-03)<br>See paragraphs [0039]-[0095]; and figures 3A-7. | 1-15 |
| A | US 2022-0283609 A1 (APPLE INC.) 08 September 2022 (2022-09-08)<br>See paragraphs [0014]-[0050]; and figures 1-5. | 1-15 |
| A | WO 2021-112493 A1 (SAMSUNG ELECTRONICS CO., LTD.) 10 June 2021 (2021-06-10)<br>See paragraphs [0033]-[0174]; and figures 1a-11b. | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 July 2024** | **02 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2020-0111519 | A | 29 September 2020 | KR | 10-2664716 | B1 | 09 May 2024 |
| | | | | US | 11580889 | B2 | 14 February 2023 |
| | | | | US | 2022-0005392 | A1 | 06 January 2022 |
| | | | | WO | 2020-190028 | A1 | 24 September 2020 |
| KR | 10-2023-0033332 | A | 08 March 2023 | CN | 117940991 | A | 26 April 2024 |
| | | | | US | 2023-0083516 | A1 | 16 March 2023 |
| | | | | WO | 2023-033422 | A1 | 09 March 2023 |
| WO | 2022-232732 | A1 | 03 November 2022 | BR | 112023021843 | A2 | 19 December 2023 |
| | | | | CN | 117256025 | A | 19 December 2023 |
| | | | | EP | 4330951 | A1 | 06 March 2024 |
| | | | | JP | 2024-518282 | A | 01 May 2024 |
| | | | | KR | 10-2023-0175213 | A | 29 December 2023 |
| | | | | TW | 202301009 | A | 01 January 2023 |
| | | | | US | 11626049 | B2 | 11 April 2023 |
| | | | | US | 2022-0351656 | A1 | 03 November 2022 |
| US | 2022-0283609 | A1 | 08 September 2022 | US | 10241543 | B2 | 26 March 2019 |
| | | | | US | 10802543 | B2 | 13 October 2020 |
| | | | | US | 11385683 | B2 | 12 July 2022 |
| | | | | US | 2010-0029335 | A1 | 04 February 2010 |
| | | | | US | 2011-0183722 | A1 | 28 July 2011 |
| | | | | US | 2012-0028688 | A1 | 02 February 2012 |
| | | | | US | 2012-0309466 | A1 | 06 December 2012 |
| | | | | US | 2013-0229381 | A1 | 05 September 2013 |
| | | | | US | 2014-0022212 | A1 | 23 January 2014 |
| | | | | US | 2015-0011248 | A1 | 08 January 2015 |
| | | | | US | 2016-0231785 | A1 | 11 August 2016 |
| | | | | US | 2017-0255234 | A1 | 07 September 2017 |
| | | | | US | 2019-0179372 | A1 | 13 June 2019 |
| | | | | US | 2021-0064094 | A1 | 04 March 2021 |
| | | | | US | 7953462 | B2 | 31 May 2011 |
| | | | | US | 8068886 | B2 | 29 November 2011 |
| | | | | US | 8346319 | B2 | 01 January 2013 |
| | | | | US | 8396517 | B2 | 12 March 2013 |
| | | | | US | 8554286 | B2 | 08 October 2013 |
| | | | | US | 8855727 | B2 | 07 October 2014 |
| | | | | US | 9332113 | B2 | 03 May 2016 |
| | | | | US | 9684341 | B2 | 20 June 2017 |
| WO | 2021-112493 | A1 | 10 June 2021 | CN | 112927610 | A | 08 June 2021 |
| | | | | CN | 112927610 | B | 05 August 2022 |
| | | | | CN | 115359719 | A | 18 November 2022 |
| | | | | EP | 3832992 | A1 | 09 June 2021 |
| | | | | EP | 3832992 | B1 | 02 November 2022 |
| | | | | EP | 4149094 | A1 | 15 March 2023 |
| | | | | ES | 2934985 | T3 | 28 February 2023 |
| | | | | JP | 2022-539577 | A | 12 September 2022 |
| | | | | JP | 7402257 | B2 | 20 December 2023 |
| | | | | KR | 10-2023-0093196 | A | 27 June 2023 |
| | | | | PL | 3832992 | T3 | 16 January 2023 |
| | | | | US | 11432410 | B2 | 30 August 2022 |
| | | | | US | 2021-0176872 | A1 | 10 June 2021 |

Form PCT/ISA/210 (patent family annex) (July 2022)

**INTERNATIONAL SEARCH REPORT**
Information on patent family members

International application No.

**PCT/KR2024/004282**

| Patent document cited in search report | Publication date (day/month/year) | Patent family member(s) | Publication date (day/month/year) |
|---|---|---|---|
| | | US 2022-0418119 A1 | 29 December 2022 |

Form PCT/ISA/210 (patent family annex) (July 2022)